# EUROPEAN PATENT APPLICATION

(11) **EP 4 607 743 A1**
(43) Date of publication of application: **27.08.2025**
(21) Application number: 23909382.6
(22) Date of filing: 21.09.2023
(51) Int. Cl.: H02J 7/00

(54) **CHARGE-DISCHARGE EQUALIZATION CONTROL METHOD AND APPARATUS, SYSTEM AND ELECTRONIC DEVICE**

(30) Priority: 27.12.2022 CN 202211685714
(71) Applicant: GUANGDONG OPPO MOBILE TELECOMMUNICATIONS CORP., LTD., Dongguan, Guangdong 523860 (CN)
(72) Inventor: ZHANG, Jialiang, Dongguan, Guangdong 523860 (CN); TIAN, Chen, Dongguan, Guangdong 523860 (CN); ZENG, Dezhi, Dongguan, Guangdong 523860 (CN)
(74) Representative: Novagraaf Technologies
(86) International application number: PCT/CN2023/120271
(87) International publication number: WO 2024/139447

(57) **Abstract**

The present application relates to a charge-discharge equalization control method and apparatus, a system and an electronic device. The method comprises: acquiring state information of a plurality of batteries connected in series during the charging or discharging process (402); and, according to the capacities and the state information of the plurality of batteries, regulating the charging current and/or discharging current of at least one battery connected to an equalization branch, such that the voltage difference of the plurality of batteries is within a preset range (404). Therefore, the charge-discharge rates of batteries having different capacities can be balanced under the condition of equalized current regulation, so as to ensure that the batteries are simultaneously fully charged or discharged. Thus, the structural space of devices having foldable screen forms or special-shaped battery compartments can be utilized to the maximum extent, so as to increase the battery capacities of terminal devices, thereby improving the usage endurance capacities of the devices.

## Description

### CROSS-REFERENCES TO RELATED APPLICATIONS

This application claims priority to Chinese Patent Application No. 202211685714.1, filed to the China National Intellectual Property Administration on December 27, 2022, and entitled "charging and discharging balance control method, apparatus, system and electronic device", which is herein incorporated by reference in its entirety.

### TECHNICAL FIELD

The present disclosure relates to the field of charging technologies, and in particular to a charging and discharging balance control method, an apparatus, a system and an electronic device.

### BACKGROUND

The description herein provides only background information relevant to the present disclosure and does not necessarily constitute exemplary technologies.

With the application of terminal devices such as screen-foldable mobile phones and tablets, new requirements have been proposed for shape design of batteries. However, in a traditional dual battery cell series connection approach, in order to ensure the charging and discharging balance of the two battery cells, it is usually required that the two battery cells have the same size, capacity and other parameters.

However, shapes of this kind of series-connected battery may be basically centrosymmetric, which may restrict structural stacking of terminal devices such as cell phones or the like, and may cause capacity waste.

### SUMMARY

According to various embodiments of the present disclosure, a charging and discharging balance control method, a charging and discharging balance control apparatus, a balance control system and an electronic device are provided. A balanced control of charging and discharging on the basis of batteries with different capacities may be realized, a battery capacity of the terminal device may be increased, and a battery life of the device may therefore be increased.

According to a first aspect of the present disclosure, a charging and discharging balance control method is provided. The method may include: obtaining status information of a plurality of batteries connected in series during a charging process or a discharging processes, wherein capacities of the plurality of batteries may be different from each other, a positive electrode of each battery may be configured to be connected to a load through a matching balancing branch, the plurality of batteries may be configured to be connected in series and to be subsequently connected to a charging circuit, the charging circuit may be configured to charge the plurality of batteries connected in series; adjusting, according to the capacities and the status information of the plurality of batteries, charging current and/or discharging current of one of the plurality of batteries connected to at least one balancing branch, so that voltage differences of the plurality of batteries may fall within a preset range.

According to a second aspect of the present disclosure, a charging and discharging balance control apparatus may be provided. The balance control apparatus may include an obtaining module and a control module. The obtaining module may be configured to obtain the status information of a plurality of batteries connected in series during a charging process or a discharging processes, wherein capacities of the plurality of batteries may be different from each other, a positive electrode of each battery may be configured to be connected to a load through a matching balancing branch, the plurality of batteries may be connected in series and subsequently connected to a charging circuit, the charging circuit may be configured to charge the plurality of batteries connected in series. The control module may be configured to adjust, according to the capacities and the status information of the plurality of batteries, the charging current and/or the discharging current of one of the plurality of batteries connected to at least one balancing branch, so that voltage differences of the plurality of batteries may fall within a preset range.

According to a third aspect of the present disclosure, a battery balance control system may be provided. The system may include: a plurality of batteries in series, a charging circuit, a plurality of balancing branches and a processing circuit. The capacities of the plurality of batteries may be different from each other, and the plurality of batteries may be configured to discharge, so as to supply voltage for a load. The charging circuit may be connected to the plurality of batteries in series, and may be configured to charge the plurality of batteries in series. Each of the plurality of balancing branches may be connected to a positive electrode of a matching battery, to the charging circuit, and to the load, and may be configured to adjust a charging current and a discharging current of a connected battery. The processing circuit may be configured to obtaining status information of each of the plurality of batteries during a charging process and/or a discharging process, and may be configured to control at least one balancing branch to adjust, according to the capacities and the status information of the plurality of batteries, the charging current and/or the discharging current of the connected battery, so that the voltage differences of the plurality of batteries may fall within a preset range.

According to a fourth aspect of the present disclosure, an electronic device may be provided. The electronic device may include: a load; and the above-mentioned balance control system.

According to a fifth aspect of the present disclosure, an electronic device may be provided. The electronic device may include: a plurality of batteries in series, a charging circuit, a plurality of balancing branches, a memory and a processor. The capacities of the plurality of batteries may be different from each other, and the plurality of batteries may be configured to discharge, so as to supply voltage for a load. The charging circuit may be connected to the plurality of batteries in series, and may be configured to charge the plurality of batteries in series. Each of the plurality of balancing branches may be connected to a positive electrode of a matching battery, to the charging circuit, and to the load, and may be configured to adjust a charging current and a discharging current of the connected battery. The memory may store a computer program. When executing the computer program, the processor may be configured to implement operations in the above-mentioned balance control method.

According to a sixth aspect of the present disclosure, a computer-readable storage medium storing a computer program may be provided. The computer program, when executed by a processor, may be configured to implement the operations of the above-mentioned balance control method.

Details of one or more embodiments of the present disclosure are set forth in the accompanying drawings and description below. Other features, objects, and advantages of the present disclosure may become apparent from the specification, the accompanying drawings, and the claim set.

### BRIEF DESCRIPTION OF THE DRAWINGS

In order to more clearly illustrate technical solutions of the present disclosure or prior art, the drawings required in the description of the embodiments or the prior art will be briefly introduced below. Obviously, the drawings in the following description are only some embodiments of the present disclosure. For those of ordinary skills in the art, other drawings could be obtained based on these drawings without creative efforts.
Fig. 1 is a schematic circuit diagram of a first embodiment of a charging and discharging circuit according to the present disclosure.
Fig. 2(a) is a schematic circuit diagram of a second embodiment of a charging and discharging circuit according to the present disclosure.
Fig. 2(b) is a schematic circuit diagram of a third embodiment of a charging and discharging circuit according to the present disclosure.
Fig. 3(a) is a schematic diagram of an embodiment of a forward step-down mode of a direct current (DC) conversion unit according to the present disclosure.
Fig. 3(b) is a schematic diagram of an embodiment of a reverse step-up mode of a DC conversion unit according to the present disclosure.
Fig. 4 is a flowchart of a first embodiment of a balance control method according to the present disclosure.
Fig. 5 is a flowchart of a second embodiment of a balance control method according to the present disclosure.
Fig. 6 is a flowchart of a third embodiment of a balance control method according to the present disclosure.
Fig. 7 is a flowchart of a fourth embodiment of a balance control method according to the present disclosure.
Fig. 8 is a flowchart of a fifth embodiment of a balance control method according to the present disclosure.
Fig. 9 is a flowchart of a sixth embodiment of a balance control method according to the present disclosure.
Fig. 10 is a structural block diagram of an embodiment of a balance control apparatus according to the present disclosure.
Fig. 11 is a structural block diagram of a first embodiment of a battery balance control system according to the present disclosure.
Fig. 12 is a structural block diagram of a second embodiment of a battery balance control system according to the present disclosure.
Fig. 13 is a structural block diagram of a third embodiment of a battery balance control system according to the present disclosure.
Fig. 14 is a structural schematic diagram of a first embodiment of a balance control process according to the present disclosure.
Fig. 15 is a structural schematic diagram of a second embodiment of a balance control process according to the present disclosure.
Fig. 16 is a structural schematic diagram of a third embodiment of a balance control process according to the present disclosure.
Fig. 17 is a structural schematic diagram of a fourth embodiment of a balance control process according to the present disclosure.
Fig. 18 is a structural schematic diagram of a fifth embodiment of a balance control process according to the present disclosure.
Fig. 19 is a structural schematic diagram of a sixth embodiment of a balance control process according to the present disclosure.
Fig. 20 is a structural schematic diagram of a seventh embodiment of a balance control process according to the present disclosure.
Fig. 21 is a structural block diagram of an embodiment of an electronic device according to the present disclosure.

### DETAILED DESCRIPTION

In order to make the purposes, technical solutions and advantages of the present disclosure more clearly understood, the present disclosure will be described in further detail below with reference to the accompanying drawings and embodiments. The specific embodiments described herein are intended for explaining the present disclosure only, and are not intended to limit the present disclosure.

The terms "first", "second", etc., as used in the present disclosure may be used herein to describe various components, but these components are not limited by these terms. These terms are used only for distinguishing a first element from the other element, and can't be construed as indicating or implying relative importance or as implicitly specifying the number of technical features indicated. Therefore, the features preceded by "first", "second" may explicitly or implicitly include at least one of the features. In the description of the present disclosure, 'a plurality of means at least two, such as two, three, etc., unless otherwise specifically defined. When a component is described to be "arranged on" another component, this component may be directly on the another component, or there may also be an intermediate component between them. When a component is considered "connected" to another component, this component may be directly connected to the another component, or there may also be an intermediate component between them.

The embodiments of the present disclosure relate to a balance control method, a balance control apparatus, and a balance control system that may be applied to electronic devices with charging and discharging functions. These electronic devices may for example be handheld devices, vehicle-mounted devices, smart cars, wearable devices, computing devices, or other processing devices connected to wireless modems, as well as various forms of user equipment (UE) (such as mobile phones), mobile stations (MS), etc. For ease of description, the devices mentioned above may be collectively referred to as electronic devices.

The embodiments of the present disclosure may relate to a balance control method, a balance control apparatus, a balance control system, an electronic device, and a computer-readable storage medium, all of which may be configured to control balanced charging and discharging of a plurality of batteries in series during a charging and discharging process, thereby enabling simultaneous full charging and complete discharging of the plurality of batteries, reducing capacity loss during the charging and discharging process, and enhancing charging speed and battery life. In the present disclosure, the capacities of the plurality of batteries may vary. The positive electrode of each battery may be connected to a load through a corresponding or matching balancing branch. The plurality of batteries may be connected in series and then connected to a charging circuit.

The capacities of the plurality of batteries may vary. The plurality of batteries of unequal capacities may increase the utilization rate of a structural space inside a device with a foldable screen configuration or an irregularly shaped battery compartment, thereby increasing the battery capacity of the terminal device, and enhancing the battery life of the device. However, capacity differences of the plurality of batteries may lead to issues where some batteries may not be fully charged or completely discharged during the charging and discharging process, resulting in battery capacity loss and an increased temperature. The battery may age at an accelerated rate, and the usable capacity of the battery may be reduced. Balanced charging and discharging may refer to a charging and discharging approach that may suppress such capacity loss between batteries in series.

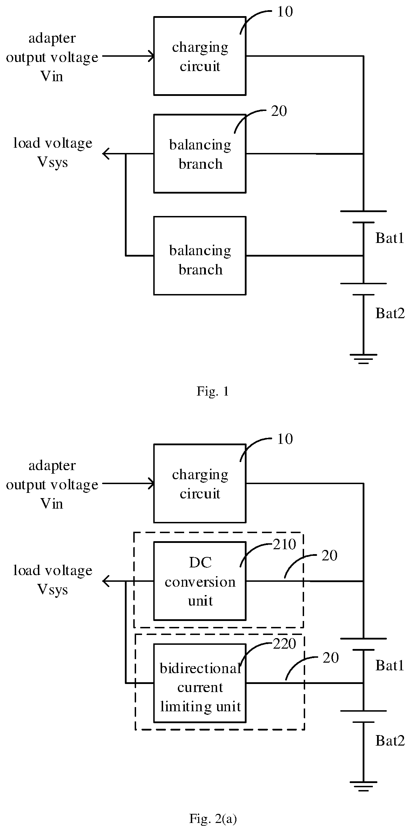

Fig. 1 is a schematic circuit diagram of an embodiment of a charging and discharging circuit according to the present disclosure. A plurality of batteries may be connected in series to a charging circuit 10, and the positive electrode of each battery may be connected to a load through corresponding balancing branches 20 to form the charging and discharging circuit. Fig. 1 illustrates an example with two batteries, namely a Bat1 battery and a Bat2 battery.

The positive electrode of each battery may be connected to the load through the corresponding balancing branches 20, thereby allowing each battery to supply power to the load. The load may refer to the electrical components used in the electronic devices applied by the charging and discharging circuit.

The plurality of batteries may be connected in series and then connected to the charging circuit 10. In this way, each battery may the charging current output from the charging circuit 10. Simultaneously, the plurality of batteries in series or the series-connected plurality of batteries may be configured to discharge, so as to supply voltage for the load. An input end of the charging circuit 10 may be configured to connect to an external power supply. The output end of the charging circuit 10 may be connected to the plurality of batteries in series and may be configured to charge the same. In some embodiments, the external power supply may be an external power supply that directly output a voltage suitable for battery charging voltage requirements. In some other embodiments, the external power supply may be an external power supply whose output charging voltage not meeting the battery charging voltage requirements. In this case, the charging circuit 10 may be configured to convert the unsuitable output voltage before charging the batteries. The connection implementation between the charging circuit 10 and the external power supply may be determined based on the size or magnitude of an adapted charging voltage of the batteries and a size or magnitude of the voltage provided by the external power source. For example, in a case where the charging circuit 10 requires a 5V DC input voltage and the external power supply provides a 220V AC voltage, the input end of the charging circuit 10 may be connected to the external power supply. The charging circuit 10 may perform voltage conversion on the 220V AC current to generate a 5V DC voltage, and the 5V DC voltage may be applied to the batteries. When the external power supply provides the 5V DC voltage, the charging circuit 10 may directly transmit the output voltage from the external power supply to the batteries.

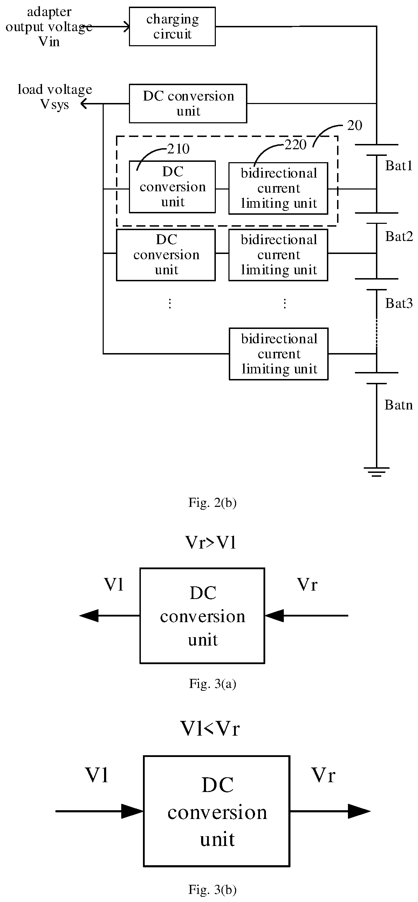

In some embodiments, as illustrated in Fig. 2(a) and Fig. 2(b), each balancing branch 20 may include a DC conversion unit 210 and/or a bidirectional current limiting unit 220. Each DC conversion unit 210 may be configured to perform voltage conversion on the voltage of the connected battery, and provide voltage to other batteries. The bidirectional current limiting unit 220 may be configured to adjust the balancing current in the balancing branch 20 where it is located, so that the voltage difference of the plurality of batteries in series may be kept within a preset range. The balancing current adjusted by the bidirectional current limiting unit 220 in the balancing branch 20 where the bidirectional current limiting unit 220 is located may be a shunt current of the balancing branch 20 for the charging current and/or the discharging current. In the plurality of batteries, two balancing branches 20, each of which may be correspondingly connected to one of every two batteries, may form a closed-loop charging circuit during the charging process. During the discharging process, the two balancing branches 20 may form a parallel multi-battery series-connected discharging circuit or a single battery series-connected discharge circuit. Therefore, in order to achieve a balanced charging and discharging control of the plurality of batteries, each of the two balancing branches 20 connected to every two batteries, where the single battery discharge circuit is located, may be equipped with at least one bidirectional current limiting unit 220, and the balancing branch 20 where the multi-battery series discharge circuit is located may be equipped with at least one DC conversion unit 210. In some embodiments, the DC conversion unit 210 and the bidirectional current limiting unit 220 may be discrete devices respectively, or may be integrated within the same chip.

Further, during the charging process, the bidirectional current limiting unit 220 may be configured to perform a balancing current adjustment process of the balancing branch 20 for a total charging current output from the charging circuit 10, so as to adjust the charging current input to each battery. In this way, it may be ensured that, the charging voltage difference of the plurality of batteries may be main within the preset range, thereby ensuring that batteries of varying capacities may be charged fully simultaneously or nearly simultaneously. During the discharging process, the bidirectional current limiting unit 220 may be configured to perform the balancing current adjustment process of the balancing branch 20 for the discharging current of each battery, so as to adjust the discharging current of the plurality of batteries. In this way, it may be ensured that, the discharging voltage differences of the plurality of batteries may be within the preset range, thereby ensuring that batteries of varying capacities may be discharged completely simultaneously or nearly simultaneously. In some embodiments, the bidirectional current limiting unit 220 may be configured to adjust the balancing current, including adjustment of a flow direction and/or current value of the balancing current. The adjustment of the flow direction of the balancing current by the bidirectional current limiting unit 220 may occur during the charging process. The bidirectional current limiting unit 220 may control the balancing current to flow from one battery through its correspondingly connected balancing branch 20, and then to flow to another battery through the balancing branch 20 correspondingly connected to the another battery, thereby allowing one battery to charge another battery, and realizing the adjustment of the charging current. The adjustment of the flow direction of the balancing current by the bidirectional current limiting unit 220 may also occur during the discharging process. The bidirectional current limiting unit 220 may control the balancing current to flow from one battery through its correspondingly connected balancing branch 20 to the load, or flow from the load to the one battery. The bidirectional current limiting unit 220 may also control the balancing current to flow from one battery, pass through its correspondingly connected balancing branch 20, and subsequently flow to another battery through its correspondingly connected balancing branch 20. In this way, the adjustment of the discharging current may be realized. The adjustment of the current value may involve increasing or reducing the current value of the balancing current. In some embodiments, the bidirectional current limiting unit 220 may be configured with a controllable current limiting mode. While operating in the controllable current limiting mode, the bidirectional current limiting unit 200 may adjust the balancing current in the balancing branch 20 where the bidirectional current limiting unit 200is located. While switching to the controllable current limiting mode, the bidirectional current limiting unit 200 may serve as a variable resistor, be capable of controlling a drive signal through a control module, and be capable of adjusting the magnitude or amplitude of the flowing current in real-time. In some embodiments, each bidirectional current limiting unit 220 may also be configured with a switch mode. While operating in the switch mode, the bidirectional current limiting unit 220 may also be configured to switch the on/off state or conducting/disconnecting state of the balancing branch 20 where the bidirectional current limiting unit 220 is located, so as to adjust the charging current and/or the discharging current of the battery connected to the balancing branch 20. While operating in the switch mode, the bidirectional current limiting unit 220 may serve as a load switch. While being fully closed/conduct/on, the bidirectional current limiting unit 200 may act as a short circuit or a fixed resistor with near-0 resistance. While being turned off, the bidirectional current limiting unit 200 may behave like an open circuit.

Furthermore, for the charging and/or discharging process, during a process in which the DC conversion unit 210 performs voltage transformation or voltage conversion on the voltage of its connected battery in the charging and discharging process, a voltage difference may exist across two ends of the DC conversion unit 210. This voltage difference may restrict the direction of the current allowed to pass through this DC conversion unit 210. Therefore, during the charging and discharging process, the bidirectional current limiting unit 220 and the DC conversion unit 210 may jointly adjust the balancing current in the balancing branch 20. In some embodiments, the DC conversion unit 210 may further be configured to perform, during the discharging process of the batteries, a step-down conversion processing of the voltages of the plurality of batteries in series, so as to supply power to the load. Consequently, each DC conversion unit 210 may be construed as being configured with a forward step-down mode and a reverse step-up mode. The forward step-down mode may involve performing the step-down conversion processing on the voltages of the plurality of batteries in series, so as to supply power to the load; or may involve performing the step-down conversion processing on the voltage of its connected battery, and output the resulted voltage to another battery. The reverse step-up mode may be construed as performing step-up conversion processing of the voltage of its connected battery, and output the resulted voltage to another battery. In the forward step-down mode, the DC conversion unit 210 may step down the input voltage to obtain a lower output voltage; and in the reverse step-up mode, the DC conversion unit 210 may step up the input voltage to obtain a higher output voltage. The input and output directions of the DC conversion unit 210 during the step-down process may be different from those of the DC conversion unit 210 during the step-up process, and the flow directions of the current allowed to pass may also vary. Therefore, the DC conversion unit 210, by operating in different modes, may not only adjust the voltage, but also restrict the flow direction of the current allowed to pass through the DC conversion unit 210. For example, as illustrated in Fig. 3(a), when the DC conversion unit 210 operates in the forward step-down mode, the voltage at a first end of the DC conversion unit 210 may be less than that at a second end of the DC conversion unit 210, thereby allowing the current to flow in at the second end and to flow out at the first end. As illustrated in Fig. 3(b), when the DC conversion unit 210 operates in the reverse step-up mode, the voltage at the first end of the DC conversion unit 210 may be less than that at the second end of the DC conversion unit 210, thereby allowing the current to flow in at the first end and to flow out at the second end.

Furthermore, when the flow direction of the current allowed to pass through the DC conversion unit 210 in the corresponding mode is the same as that of the balancing branch 20, the DC conversion unit 210 in the balancing branch 20 may be equivalently conducted; when the flow direction of the current allowed to pass through the DC conversion unit 210 in the corresponding mode is opposite to that of the balancing current, the DC conversion unit 210 in the balancing branch 20 may be equivalently turned off. Therefore, the DC conversion unit 210 may be simply construed as having the switch mode relative to the balancing current of the balancing branch 20. The switch mode may include a conducting mode and a turning-off mode within the switch mode. When the flow direction of the balancing current is the same as that of the current allowed to pass through by the corresponding mode, the DC conversion unit 210 may be in the conducting mode, a transmission path of the balancing current may be equivalently conducted. When the flow direction of the balancing current is opposite to that of the current allowed to pass through by the corresponding mode, the DC conversion unit 210 may be in the turning-off mode, the transmission path of the balancing current may be equivalently turned off.

Therefore, each of the balance control method, the balance control apparatus, the balance control system, the electronic device and the computer-readable storage medium involved in embodiments of the present disclosure may adjust the charging current and/or the discharging current of the battery connected to at least one balancing branch 20. In this way, the voltage difference of the plurality of batteries may fall within the preset range, thereby achieving control of the balanced charging and discharging of the plurality of batteries in series during the charging and discharging process.

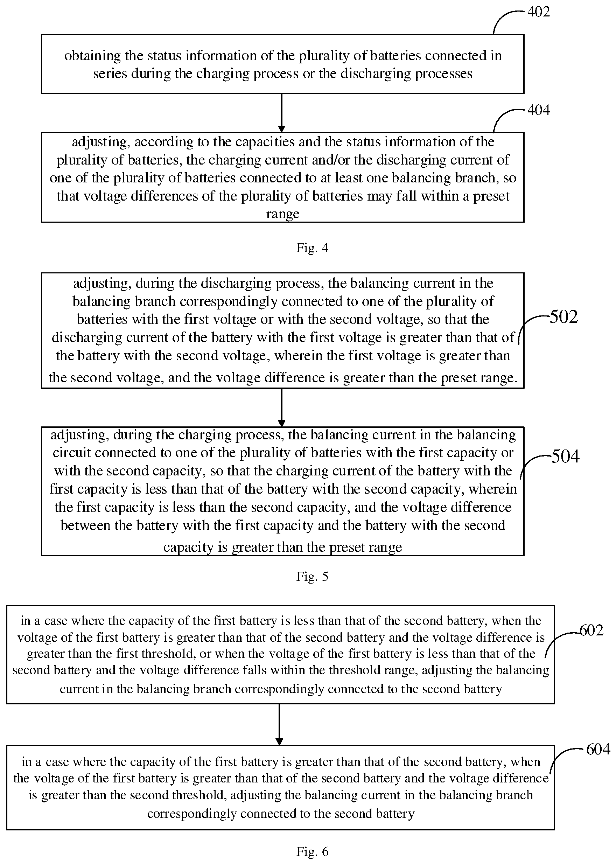

The charging and discharging balance control method may be provided in some embodiments of the present disclosure. The charging and discharging balance control method may include operations at block 402 to block 404 as illustrated in Fig. 4.

The operation at block 402: obtaining the status information of the plurality of batteries connected in series during the charging process or the discharging processes. Capacities of the plurality of batteries may be different from each other. The positive electrode of each battery may be connected to a load through a corresponding balancing branch. The plurality of batteries may be connected in series and subsequently connected to the charging circuit. The charging circuit may be configured to charge the plurality of batteries connected in series. For details of the plurality of batteries, the charging circuit, the balancing branches, and the load, please refer to the related descriptions in the above-mentioned embodiments, which shall not be repeated here. The status information of the plurality of batteries may include parameter information of the battery power level and/or the voltage of each battery. The parameter information of the battery power level and/or the voltage of each battery may characterize the current charging and/or discharging status of each battery. Therefore, the balancing current of the balancing branch matching each battery may be adjusted according to the obtained status information and the capacity of the battery, so as to adjust the balanced charging and/or balanced discharging of each battery. The battery power level of the battery may be directly proportional to the voltage of the battery. Therefore, the determination conditions related to the voltage and the voltage difference involved in the present disclosure may also be applicable to the determination related to the battery power level and the battery power level difference.

The operation at block 404: adjusting, according to the capacities and the status information of the plurality of batteries, the charging current and/or the discharging current of one of the plurality of batteries connected to at least one balancing branch, so that voltage differences of the plurality of batteries may fall within a preset range. After the status information of the plurality of batteries is obtained, the current charging and/or discharging status of each battery may be determined according to the status information and the capacity. In this way, the charging current and/or the discharging current of the battery connected to at least one balancing branch may be adjusted in a targeted manner according to the charging and/or discharging status of each battery, so as to control the voltage differences of the plurality of batteries to fall within the preset range, thereby achieving balanced charging and/or balanced discharging of each battery. Further, the adjustment of the charging current and/or the discharging current of the battery connected to at least one balancing branch may be achieved by the DC conversion unit and/or the bidirectional current limiting unit of the balancing branch of the above-mentioned embodiments.

The preset range may refer to an allowable range of the voltage difference of the various batteries when the capacity loss of the series-connected batteries may be suppressed during the charging and/or discharging process. When the voltage differences of the plurality of batteries fall within this preset range, the charging and discharging balance may be achieved. In some embodiments, the preset range may be a near-zero voltage difference or a voltage difference equal to 0. When the voltage difference is greater than the preset range, the balanced charging and/or discharging may be not achieved between the two batteries, thereby necessitating adjustments to the charging current and/or the discharging current. At least one battery connected to a balancing branch may be construed as either of two batteries between which the voltage difference is greater than the preset range. When there is a voltage difference between the two batteries, the voltage difference adjustment may be achieved either by adjusting the charging current and/or discharging current of the balancing branch correspondingly connected to one of the two batteries, or by simultaneously adjusting the charging current and/or discharging current of the balancing branches connected to both batteries.

In some embodiments, by adjusting the balancing current in the balancing branch, the charging current and/or the discharging current may be adjusted. The adjustment of the balancing current in the balancing branch may include adjustment of the flow direction of the balancing current and/or adjustment of the current value. In some embodiments, the adjustment of the flow direction of the balancing current may include: during the charging process, controlling the balancing current to flow from one battery through its correspondingly connected balancing branch and then through the balancing branch correspondingly connected to another battery to the another battery, thereby allowing the one battery to charge the another battery, and realizing the adjustment of the charging current. The adjustment of the flow direction of the balancing current may also include: during the discharging process, controlling the balancing current to flow from one battery through its correspondingly connected balancing branch to the load, or flow from the load to the one battery, or controlling the balancing current to flow from one battery through its correspondingly connected balancing branch and then through the balancing branch correspondingly connected to another battery to the another battery, thereby realizing the adjustment of the discharging current. The adjustment of the current value may involve increasing or reducing the current value of the balancing current.

In the charging and discharging balance control method provided in the present embodiment, obtaining status information of the plurality of batteries connected in series during the charging process or the discharging processes; adjusting, according to the capacities and the status information of the plurality of batteries, the charging current and/or the discharging current of one of the plurality of batteries connected to at least one balancing branch, so that voltage differences of the plurality of batteries may fall within the preset range. In this way, the charging and discharging rates of the batteries with different capacities may be balanced under the condition of electrical current balancing adjustment, and it may be ensured that the batteries may be fully charged or completely discharged simultaneously, or may approach simultaneous full charge or complete discharge. The utilization rate of the structural space inside a device with a foldable screen configuration or an irregularly shaped battery compartment may be increased, the battery capacity of the terminal device may be increased, and the battery life of the device may thereby be enhanced.

In some embodiments, the adjusting the charging current and/or the discharging current of one of the plurality of batteries connected to at least one balancing branch may include operations at block 502 and block 504 as illustrated in Fig. 5.

The operation at block 502: adjusting, during the discharging process, the balancing current in the balancing branch correspondingly connected to one of the plurality of batteries with a first voltage or with a second voltage, so that the discharging current of the battery with the first voltage may be greater than that of the battery with the second voltage, the first voltage may be greater than the second voltage, and the voltage difference may be greater than the preset range.

The first voltage may be greater than the second voltage. Under the same discharging current, due to the different capacities of the battery with the first voltage and the battery with the second voltage, the voltage drop rates of the two batteries may be different. The voltage drop rate of a small-capacity battery may be greater than that of a large-capacity battery, resulting in a voltage difference between the two batteries. The two batteries with the voltage difference may be construed as the battery with the first voltage and the battery with the second voltage respectively. If the battery with the first voltage and the battery with the second voltage continue to discharge at the same discharging current, the voltage difference between the two batteries may become greater and greater, resulting in a case where the two batteries are unable to be completely discharged simultaneously in the end. In order to avoid the voltage difference between the two batteries from becoming greater and greater, which would lead to the case where the two batteries cannot be completely discharged simultaneously in the end, the balancing current of the balancing branch correspondingly connected to either one of the two batteries may be adjusted according to the voltage and voltage difference of each battery. Thus, the discharge condition of the battery may be adjusted through the balancing current, to adjust the magnitude relationship between the discharging current of the battery with the second voltage and the discharging current of the battery with the first voltage, so that the discharging current of the battery with the first voltage in the two batteries may be greater than the discharging current of the battery with the second voltage. When the discharging current of the battery with the first voltage is greater than that of the battery with the second voltage, since the discharging current of the battery with the first voltage is relatively larger, the voltage drop rate of the battery with the first voltage may be greater than that of the battery with the second voltage. In this way, the voltage difference may be rapidly reduced, achieving a discharge balance, keeping the voltages of batteries of different capacities being basically the same, and ensuring that the two batteries may be completely discharged or depleted simultaneously.

The operation at block 504: adjusting, during the charging process, balancing current in the balancing circuit connected to one of the plurality of batteries with a first capacity or with a second capacity, so that a charging current of the battery with the first capacity may be less than that of the battery with the second capacity, the first capacity may be less than the second capacity, and the voltage difference between the battery with the first capacity and the battery with the second capacity may be greater than the preset range.

The first capacity may be greater than the second capacity. Under the same charging current, due to the different capacities of the battery with the first capacity and the battery with the second capacity, the voltage rise rates of the two batteries may be different. The voltage rise rate of the small-capacity battery may be greater than that of the large-capacity battery, resulting in a voltage difference between the two batteries. The two batteries with the voltage difference may be construed as the battery with the first capacity and the battery with the second capacity respectively. If the battery with the first capacity and the battery with the second capacity continue to charge at the same charging current, the voltage difference between the two batteries may become greater and greater, resulting in a case where the two batteries may be unable to be fully charged simultaneously in the end. In order to avoid the voltage difference between the two batteries from becoming greater and greater, which would lead to the case where the two batteries may be not-fully charged simultaneously in the end, the balancing current of the balancing branch correspondingly connected to either one of the two batteries may be adjusted according to the voltage and voltage difference of each battery. Thus, the charging condition of the battery may be adjusted through the balancing current, to adjust the magnitude relationship between the charging current of the battery with the second capacity and the charging current of the battery with the first capacity, so that the charging current of the battery with the first capacity in the two batteries may be less than the charging current of the battery with the second capacity. When the charging current of the battery with the first capacity is less than that of the battery with the second capacity, since the charging current of the battery with the first capacity may be relatively smaller, the voltage rise rate of the battery with the first capacity may be greater than that of the battery with the second voltage. In this way, the voltage difference may be rapidly reduced, achieving a charging balance, keeping the voltages of batteries of different capacities being basically the same, and ensuring that the two batteries may be fully charged simultaneously.

In some embodiments, the plurality of batteries may include a first battery and a second battery, the second battery may be connected to the charging circuit through the first battery; the status information may include a voltage of each of the plurality of batteries. The adjusting, during the discharging process, the balancing current in the balancing branch correspondingly connected to one of the plurality of batteries with the first voltage or with the second voltage may include operations at block 602 and block 604 as illustrated in Fig. 6.

The operation at block 602: in a case where the capacity of the first battery is less than that of the second battery, when the voltage of the first battery is greater than that of the second battery and the voltage differences greater than a first threshold, or when the voltage of the first battery is less than that of the second battery and the voltage difference falls within the threshold range, adjusting the balancing current in the balancing branch correspondingly connected to the second battery. The operation at block 604: in a case where the capacity of the first battery is greater than that of the second battery, when the voltage of the first battery is greater than that of the second battery and the voltage difference is greater than a second threshold, adjusting the balancing current in the balancing branch correspondingly connected to the second battery.

The threshold range may be less than or equal to the first threshold and greater than the second threshold. The second threshold may be greater than the preset range and less than the first threshold. The first threshold and the second threshold may both exceed the preset range. Thus, the voltage differences corresponding to the first threshold and the second threshold both have problems of unbalanced discharge. During the process of discharge balancing adjustment, when the voltage difference is greater, the adjustment amplitude of the corresponding balancing current may be greater; when the voltage difference is smaller, the adjustment amplitude of the corresponding balancing current may be smaller.

The second battery may be connected to the charging circuit through the first battery, thus the first battery is located at a high end close to the charging circuit relative to the second battery, and the second battery is located at a low end far from the charging circuit relative to the first battery. During the discharge process, the positive electrode of the first battery may be connected to the load through the balancing branch. On one hand, the positive electrode of the second battery may be connected to the load in series through the first battery. On the other hand, the positive electrode of the second battery may be connected to the load through the balancing branch. Regarding the first battery and the second battery, the balancing branch and series branch corresponding to the first battery may form a first discharging path, and the balancing branch corresponding to the second battery may form a second discharging path. The two discharging paths may be connected in parallel. By adjusting the balancing current in the first discharging path and/or the second discharging path, the discharging currents of the first battery and the second battery may be adjusted. It should be appreciated that, when the plurality of batteries merely means two batteries, the balancing current in the balancing branch correspondingly connected to the second battery located at the low end may be directly adjusted. When the number of the plurality of batteries is greater than two, if the first battery is located at the top end and the second battery is located at the bottom respectively, only the balancing current in the balancing branch corresponding to the second battery may be controlled. If neither the first battery nor the second battery is located at the top end, the balancing current in the balancing branch corresponding to the first battery and/or the balancing current in the balancing branch corresponding to the second battery may be adjusted.

When the capacity of the first battery is less than that of the second battery, in a case where the voltage of the first battery is greater than that of the second battery and the voltage difference is greater than the first threshold, if the first battery and the second battery discharge at the same discharging current, the voltage drop rate of the first battery with smaller capacity and larger voltage may be less than that of the second battery with larger capacity and smaller voltage, thereby resulting in imbalance. Therefore, in a case where this condition is met, adjusting the balancing branch in the balancing branch correspondingly connected to the second battery, to enable the discharging current of the first battery being greater than that of the second battery, and further to enable the voltage drop rate of the first battery being greater than that of the second battery, thereby reducing the voltage difference, and achieving a balanced discharge. In some embodiments, adjusting the discharging current of the first battery to be equal to the sum of the discharging current of the second battery and the balancing current, so that the discharging current of the first battery may be greater than that of the second battery, i.e., Ibat1 = Ibat2+Ib>Ibat2. Ibat1 may be the discharging current of the first battery, Ibat2 may be the discharging current of the second battery, and Ib may be the balancing current.

In a case where the capacity of the first battery is less than that of the second battery, the voltage of the first battery is less than that of the second battery and the voltage difference falls within the threshold range, if the first battery and the second battery discharge at the same discharging current, the voltage drop rate of the first battery with smaller capacity and smaller voltage may be greater than that of the second battery with larger capacity and larger voltage, thereby resulting in imbalance. Therefore, in a case where this condition is met, adjusting the balancing branch in the balancing branch correspondingly connected to the second battery, to enable the discharging current of the first battery being greater than that of the second battery, and further to enable the voltage drop rate of the first battery being less than that of the second battery, thereby reducing the voltage difference, and achieving a balanced discharge. In some embodiments, adjusting the discharging current of the first battery to be equal to the difference between the total discharging current input to the load and the balancing current, so that the discharging current of the first battery may be less than that of the second battery, i.e., Ibat1 = Isys - Ib < Ibat2. Isys may be a total discharging current input to the load.

In a case where the capacity of the first battery is greater than that of the second battery, the voltage of the first battery is greater than that of the second battery, and the voltage difference is greater than the second threshold, if the first battery and the second battery discharge at the same discharging current, the voltage drop rate of the first battery with larger capacity and larger voltage may be less than that of the second battery with smaller capacity and smaller voltage, thereby resulting in imbalance. Therefore, in a case where this condition is met, adjusting the balancing branch in the balancing branch correspondingly connected to the second battery, to enable the discharging current of the first battery being greater than that of the second battery, and further to enable the voltage drop rate of the first battery being greater than that of the second battery, thereby reducing the voltage difference, and achieving the balanced discharge. In some embodiments, adjusting the discharging current of the first battery to be equal to the difference between the total discharging current discharged to the load and the balancing current, so that the discharging current of the first battery may be greater than that of the second battery, i.e., Ibat1 = Isys + Ib < Ibat2.

By matching the conditions of different capacities, different voltages and different voltage differences of the first battery and the second battery with the preset discharging current adjustment conditions, the discharge currents of the first battery and/or the second battery may be controlled in the targeted manner by controlling the balancing current, so as to control the voltage difference between the first battery and the second battery to fall within the preset range, and achieve the discharging balance of the first battery and the second battery. In some other embodiments, when there are more than two batteries, the discharging balance control approach of the first battery and the second battery may be referred to. When the voltage differences of different batteries are different, the flow directions and parameter values of the balancing current may be adjusted in different directions and to different degrees corresponding to different balancing branches, so as to achieve discharging balance of the plurality of batteries.

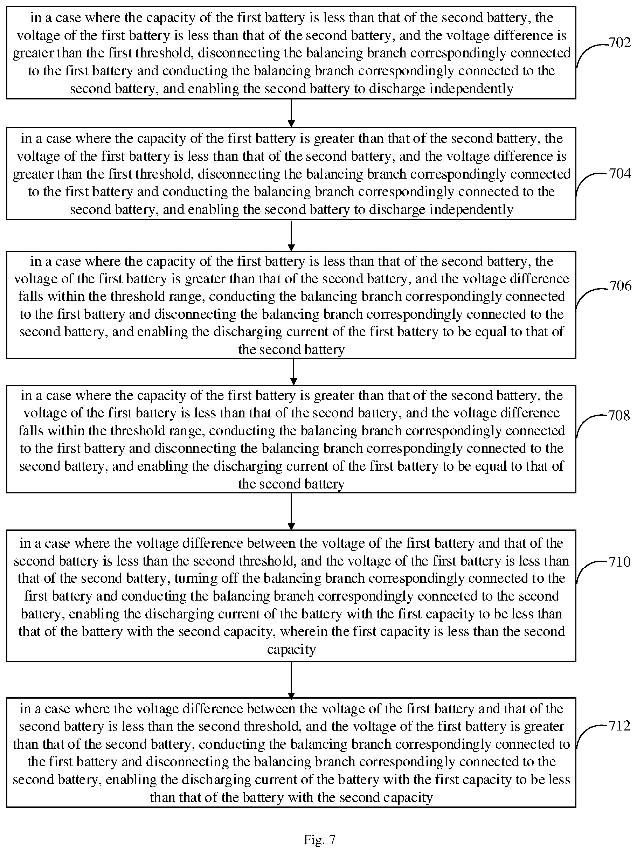

In some embodiments, the balance control method may further include operations at block 702 and block 704 as illustrated in Fig. 7.

The operation at block 702: in a case where the capacity of the first battery is less than that of the second battery, the voltage of the first battery is less than that of the second battery, and the voltage difference is greater than the first threshold, disconnecting the balancing branch correspondingly connected to the first battery and conducting the balancing branch correspondingly connected to the second battery, and enabling the second battery to discharge independently. The operation at block 704, in a case where the capacity of the first battery is greater than that of the second battery, the voltage of the first battery is less than that of the second battery, and the voltage difference is greater than the first threshold, disconnecting the balancing branch correspondingly connected to the first battery and conducting the balancing branch correspondingly connected to the second battery, and enabling the second battery to discharge independently.

When the voltage difference is greater than the first threshold, the voltage difference may be beyond the preset range. Thus, the voltage difference greater than the first threshold will lead to unbalanced discharge of the batteries. In a case where the capacity of the first battery is less than that of the second battery, the voltage of the first battery is less than that of the second battery, and the voltage difference is greater than the first threshold, if the first battery with small capacity and low voltage continues to discharge, it would be depleted in a short time. Therefore, disconnecting the balancing branch correspondingly connected to the first battery and turning-on the balancing branch correspondingly connected to the second battery, to enable the second battery to discharge alone and to avoid over-discharge of the first battery. In this way, it may be ensured that, the first battery and the second battery may be completely discharged simultaneously to achieve discharge balance between the first battery and the second battery. In a case where the capacity of the first battery is greater than that of the second battery, the voltage of the first battery is less than that of the second battery, and the voltage difference is greater than the first threshold, if the first battery with large capacity and large voltage continues to discharge, it would be depleted in a short time. Therefore, disconnecting the balancing branch correspondingly connected to the first battery and turning-on the balancing branch correspondingly connected to the second battery, to enable the second battery to discharge alone and to avoid over-discharge of the first battery. In this way, it may be ensured that, the first battery and the second battery may be completely discharged simultaneously to achieve discharge balance between the first battery and the second battery. When the capacities of the first battery and the second battery are different, by comparing the voltage difference between the first battery and the second battery with the first threshold value, and purposefully switching the on-off state of the balancing branch, the discharge currents of the first battery and the second battery may be controlled, so as to keep the voltage difference between the first battery and the second battery within the preset range, and to achieve the discharging balance between the first battery and the second battery.

In some embodiments, as illustrated in Fig. 7, the balance control method may further include: the operations at block 706 and block 708.

The operation at block 706: in a case where the capacity of the first battery is less than that of the second battery, the voltage of the first battery is greater than that of the second battery, and the voltage difference falls within the threshold range, conducting the balancing branch correspondingly connected to the first battery and disconnecting the balancing branch correspondingly connected to the second battery, enabling the discharging current of the first battery to be equal to that of the second battery. The operation at block 708, in a case where the capacity of the first battery is greater than that of the second battery, the voltage of the first battery is less than that of the second battery, and the voltage difference falls within the threshold range, conducting the balancing branch correspondingly connected to the first battery and disconnecting the balancing branch correspondingly connected to the second battery, to enable the discharging current of the first battery to be equal to that of the second battery.

The threshold range may be a range that is less than the first threshold and greater than the second threshold. When the voltage difference is within the threshold range and the threshold range exceeds the preset range, the voltage difference within the threshold range may cause unbalanced discharge of the batteries. In a case where the capacity of the first battery is less than that of the second battery, the voltage of the first battery is greater than that of the second battery, and the voltage difference falls within the threshold range, if as an example, the balancing current adjustment mode continues to be in operation, and enables the discharging current of the first battery to be greater than that of the second battery (at this point, Ibat1=Ibat2+Ib>Ibat2), since the voltage drop rate of the first battery is greater than that of the second battery, when the voltage difference rapidly decreases from being greater than the first threshold to within the threshold range, the voltage difference would increase in an opposite direction. That is, the voltage difference will rapidly change from a case where the voltage of the first battery is greater than that of the second battery to another case where the voltage of the second battery is greater than that of the first battery, and the voltage difference would gradually increase. Therefore, when the voltage difference is within the threshold range, it may be necessary to switch the balanced control mode from the balancing current adjustment mode to the switch mode, and turn on the balancing branch correspondingly connected to the first battery and turn off the balancing branch correspondingly connected to the second battery, so that the discharging current of the first battery may be equal to that of the second battery, i.e., Ibat1 = Ibat2. On the basis of ensuring that the voltage of the first battery drops, the drop rate of the voltage of the first battery may be slowed down, thereby ensuring that the first battery may be not over-discharged. In a case where the capacity of the first battery is greater than that of the second battery, the voltage of the first battery is less than that of the second battery, and the voltage difference falls within the threshold range, if when the voltage difference is greater than the first threshold, the scheme continues to operate in the balancing current adjustment mode and the second battery is enabled to discharge alone, the voltage of the second battery will continue to drop. When the voltage difference rapidly decreases from being greater than the first threshold to within the threshold range, the voltage difference will increase in the opposite direction. That is, the voltage difference will quickly switch from a case where the voltage of the first battery is less than the voltage of the second battery to another case where the voltage of the first battery is greater than the voltage of the second battery, and the voltage difference will gradually increase. Therefore, when the voltage difference is within the threshold range, it may be necessary to switch to another mode of the switch mode, and turn-on the balancing branch correspondingly connected to the first battery and disconnect the balancing branch correspondingly connected to the second battery. The second battery with the smaller capacity may supply power to the load in series through the balancing branch correspondingly connected to the first battery, so that the discharging current of the first battery may be equal to that of the second battery, i.e., Ibat1 = Ibat2. On the basis of ensuring that the voltage of the second battery drops, the drop rate of the voltage of the first battery may be slowed down, thereby ensuring that the second battery may be not over-discharged. When the capacities of the first battery and the second battery are different, by comparing the voltage difference between the first battery and the second battery with the threshold range, and purposefully switching the on-off state of the balancing branch, the discharge currents of the first battery and the second battery may be controlled, so as to keep the voltage difference between the first battery and the second battery within a preset range, and to achieve the discharging balance between the first battery and the second battery.

In some embodiments, the balance control method may further include operations at block 710 and block 712 as illustrated in Fig. 7.

The operation at block 710: in a case where the voltage difference between the voltage of the first battery and that of the second battery is less than the second threshold, and the voltage of the first battery is less than that of the second battery, turning off the balancing branch correspondingly connected to the first battery and conducting the balancing branch correspondingly connected to the second battery, enabling the discharging current of the battery with the first capacity to be less than that of the battery with the second capacity. the first capacity may be less than the second capacity. The operation at block 712: in a case where the voltage difference between the voltage of the first battery and that of the second battery is less than the second threshold, and the voltage of the first battery is greater than that of the second battery, conducting the balancing branch correspondingly connected to the first battery and disconnecting the balancing branch correspondingly connected to the second battery, enabling the discharging current of the battery with the first capacity to be less than that of the battery with the second capacity.

When the voltage difference is less than the second threshold, the voltage difference may exceed the preset range, but the exceeded part may be very small and may approach 0 or be near 0. At this point, the first battery and the second battery may be finely tuned. Compared with other above-mentioned embodiments, the magnitude (or the parameter value) of the balancing current may be relatively small. In a case where the voltage difference between the voltage of the first battery and that of the second battery is less than the second threshold, and the voltage of the first battery is less than that of the second battery, if the first battery with small voltage continues to discharge, the first battery may be depleted in a short time. Therefore, the balancing branch correspondingly connected to the first battery may be turned off, and the balancing branch correspondingly connected to the second battery may be conducted, to enable the second battery to supply power alone, to prevent unbalanced discharge of the first battery and the second battery, and to prevent over-discharge of the first battery. In a case where the voltage difference between the voltage of the first battery and that of the second battery is less than the second threshold, and the voltage of the first battery is greater than that of the second battery, if the second battery with small voltage continues to discharge along, the second battery may be depleted in a short time. Therefore, the balancing branch correspondingly connected to the first battery may be conducted and the balancing branch correspondingly connected to the second battery may be disconnected, so that the first battery and the second battery may be connected in series for power supply, avoiding the over-discharge of the second battery, ensuring that the first battery and the second battery are completely discharged simultaneously, and realizing discharge balance of the first battery and the second battery. Therefore, when distributing the discharging paths of the first battery and the second battery, the current may be automatically and evenly distributed according to the actual operating voltage relationship. During the entire discharge process, the average discharging current of the small-capacity battery may be less than that of the large-capacity battery, so that the voltage difference in the entire process may be near 0, ensuring that the two batteries may be completely discharged simultaneously.

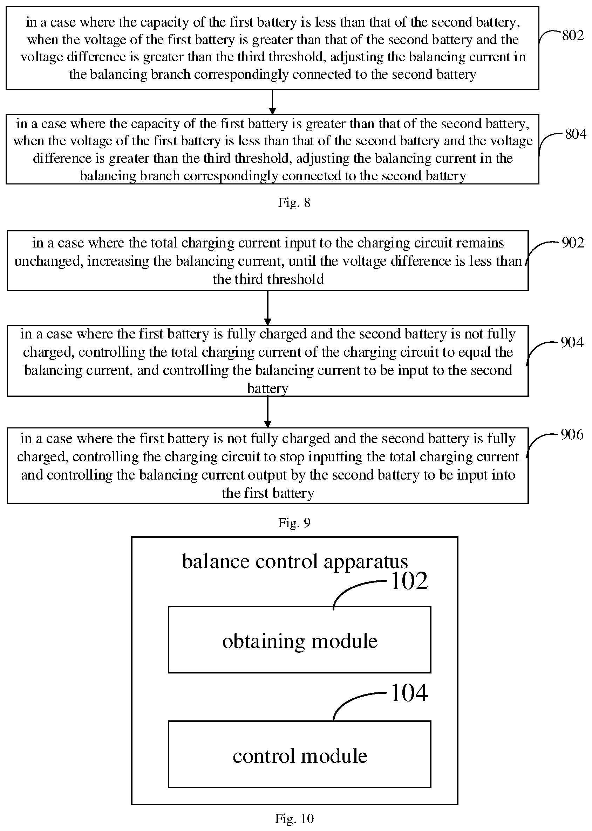

In some embodiments, the plurality of batteries may include the first battery and the second battery. The second battery may be connected to the charging circuit through the first battery. The status information may include the voltage of each of the plurality of batteries. As illustrated in Fig. 8, the adjusting, during the charging process, the balancing current in the balancing circuit correspondingly connected to one of the plurality of batteries with the first capacity or with the second capacity may include operations at block 802 and at block 804 as illustrated in Fig. 8.

The operation at block 802: in a case where the capacity of the first battery is less than that of the second battery, when the voltage of the first battery is greater than that of the second battery and the voltage difference is greater than a third threshold, adjusting the balancing current in the balancing branch correspondingly connected to the second battery. The operation at block 804: in a case where the capacity of the first battery is greater than that of the second battery, when the voltage of the first battery is less than that of the second battery and the voltage difference is greater than the third threshold, adjusting the balancing current in the balancing branch correspondingly connected to the second battery.

The third threshold may exceed the preset range. Thus, the voltage differences corresponding to or matching the third threshold may all have problems of unbalanced discharge. During the process of charging balancing adjustment, when the voltage difference is greater, the adjustment amplitude of the balancing current of the corresponding balancing current adjustment mode may be greater; when the voltage difference is less, the adjustment amplitude of the balancing current of the corresponding balancing current adjustment mode may be less.

During the charging process, the first battery may be connected to the charging circuit, the second battery may be connected in series to the charging circuit through the first battery. The balancing branch for the first battery and the balancing branch for the second battery may form a closed-loop charging circuit with the series branch. Regarding the first battery and the second battery, the paths of the charging current of the two batteries may be mainly on the series branch of the first battery and the second battery. The balancing branch for the first battery and the balancing branch for the second battery would obtain the shunt current of the charging current, i.e., the balancing current. Therefore, during the balancing current adjustment process, the charging current of the first battery and the charging current of the second battery may be adjusted by adjusting the balancing current of the balancing branch correspondingly connected to the first battery and/or by adjusting the balancing current of the balancing branch correspondingly connected to the second battery. When the plurality of batteries merely means two batteries, the balancing current in the balancing branch correspondingly connected to the second battery located at the low end may be directly adjusted. When the number of the plurality of batteries is greater than two, if the first battery is located at the top end and the second battery is located at the bottom respectively, only the balancing current in the balancing branch corresponding to the second battery may be controlled. If neither the first battery nor the second battery is located at the top end, the balancing current in the balancing branch corresponding to the first battery and/or the balancing current in the balancing branch corresponding to the second battery may be simultaneously adjusted.

When the capacity of the first battery is less than that of the second battery, in a case where the voltage of the first battery is greater than that of the second battery and the voltage difference is greater than the third threshold, if the first battery and the second battery are charged at the same charging current, the voltage rise rate of the first battery with smaller capacity and larger voltage may be greater than that of the second battery with larger capacity and smaller voltage, thereby resulting in imbalance. Therefore, in a case where this condition is met, adjusting the balancing branch in the balancing branch correspondingly connected to the second battery, to enable the charging current of the first battery to be greater than that of the second battery, and further to enable the voltage rise rate of the first battery to be less than that of the second battery, thereby reducing the voltage difference, and achieving the balanced charging.

In a case where the capacity of the first battery is greater than that of the second battery, the voltage of the first battery is less than that of the second battery, and the voltage difference is greater than the third threshold, if the first battery and the second battery are charged at the same charging current, the voltage rise rate of the first battery with greater capacity and smaller voltage may be less than that of the second battery with smaller capacity and larger voltage, thereby resulting in imbalance. Therefore, in a case where this condition is met, adjusting the balancing branch in the balancing branch correspondingly connected to the second battery, to enable the charging current of the first battery to be greater than that of the second battery, and further to enable the voltage rise rate of the first battery to be greater than that of the second battery, thereby reducing the voltage difference, and achieving a balanced charging.

By matching the conditions of different capacities, different voltages and different voltage differences of the first battery and the second battery with the preset charging current adjustment conditions, the charging currents of the first battery and/or the second battery may be controlled in a targeted manner by controlling the balancing current, so as to control the voltage difference between the first battery and the second battery to fall within the preset range, and achieve the charging balance of the first battery and the second battery. In some other embodiments, when there are more than two batteries, the charging balance control approach of the first battery and the second battery may be referred to. When the voltage differences of different batteries are different, the flow directions and parameter values of the balancing current may be adjusted in different directions and to different degrees corresponding to different balancing branches, so as to achieve charging balance of the plurality of batteries.

In some embodiments, the adjusting, during the charging process, the balancing current in the balancing branch correspondingly connected to the first battery and the second battery may include the operation at block 902 as illustrated in Fig. 9.

The operation at block 902: in a case where the total charging current input to the charging circuit remains unchanged, increasing the balancing current, until the voltage difference is less than the third threshold. Specifically, in a case where the balancing current is adjusted to enable the charging current of the first battery to be greater than that of the second battery, the balancing current in the closed-loop balancing branch may be increased and input to the first battery. Therefore, the charging current of the first battery may be equal to the sum of the charging current of the second battery and the balancing current, i.e., Ibat1 = Ibat2 + Ib. Ib may be constantly increasing, so that the voltage difference may be constantly decreasing. In a case where the balancing current is adjusted to enable the charging current of the first battery being less than that of the second battery, the balancing current in the closed-loop balancing branch may be increased and input to the second battery. Therefore, the charging current of the second battery may be equal to the sum of the charging current of the first battery and the balancing current, i.e., Ibat2 = Ibat1 + Ib. Ib may be constantly increasing, so that the voltage difference may be constantly decreasing.

In some embodiments, the adjusting, during the charging process, the balancing current in the balancing branch correspondingly connected to the first battery and the second battery may further include: in a case where the balancing current is equal to the current threshold and the voltage difference is greater than the third threshold, reducing the total charging current.

The current threshold may be the maximum value of the preset balancing current. When the balancing current exceeds the current threshold, there may be charging safety issues. Therefore, the adjustment of the balancing current should be controlled to not exceed the current threshold.

When the balancing current is adjusted to the current threshold and the voltage difference is greater than the third threshold, it may be impossible to continue to adjust the charging current of each battery by adjusting the balancing current. The adjustment of the charging current of each battery may be achieved by adjusting the total charging current output by the charging current. Specifically, by reducing the total charging current and combining the same with the previous adjustment of the balancing current, the adjustment of the charging current of each battery may be finally achieved to realize the balanced charging.

In some embodiments, the adjusting, during the charging process, the balancing current in the balancing branch correspondingly connected to the first battery and the second battery may further include operations at block 904 and block 906 as illustrated in Fig. 9.

The operation at block 904: in a case where the first battery is fully charged and the second battery is not fully charged, controlling the total charging current of the charging circuit to equal the balancing current, and controlling the balancing current to be input to the second battery. During the balancing current adjustment process in the charging process, if the charging current of the first battery is continuously increased, a case may occur where the first battery may be fully charged while the second battery may be not fully charged. At this point, in order to avoid overcharging of the first battery and achieve the balanced charging of the first battery and the second battery, the total charging current of the charging circuit may be controlled to be equal to the balancing current, and the balancing current may be controlled to be input to the second battery. Thus, the balancing current in the closed-loop branch may be equal to the total charging current, and the balancing current may be input to the second battery, i.e., Ib = Ich. This may enable Ibat1 = Ich - Ib = 0 and Ibat2 = Ich, thereby ensuring that the first battery may be not overcharged and the second battery may be fully charged.

The operation at block 906: in a case where the first battery is not-fully charged and the second battery is fully charged, controlling the charging circuit to stop inputting the total charging current and controlling the balancing current output by the second battery to be input into the first battery. During the balancing current adjustment process in the charging process, if the charging current of the second battery is continuously increased, a case may occur where the second battery is fully charged while the first battery is not fully charged. At this point, in order to avoid overcharging of the second battery and to achieve the balanced charging of the first battery and the second battery, the charging circuit may be controlled to stop inputting the total charging current, and the balancing current output by the second battery may be controlled to be input into the first battery, In other words, Ich=0, Ib≠0. The second battery may charge the first battery, enabling both batteries to return to the not-fully charged state.

In some embodiments, the plurality of batteries may include the first battery and the second battery, the second battery may be connected to the charging circuit through the first battery. The status information may include a voltage of each of the plurality of batteries. The balance control method may further include: in a case where the voltage of the battery with the first capacity is less than the voltage of the battery with the second capacity, disconnecting the balancing branch correspondingly connected to the second battery, so that the plurality of batteries may be connected in series for charging, the voltage rise rate of the battery with the first capacity may be greater than that of the battery with the second capacity.

The first capacity may be less than the second capacity. In other words, the battery with the first capacity may be the small-capacity battery, and the battery with the second capacity may be the large-capacity battery.

In a case where the voltage of the battery with the first capacity is less than the voltage of the battery with the second capacity, the balancing branch where the balancing current is in may be disconnected, and the charging process may be directly performed through the charging current. When the battery with the first capacity and the battery with the second capacity are charged with the same charging current, since the voltage rise rate of the small-capacity battery may be greater than that of the large-capacity battery, the voltage difference between the small-capacity battery and the large-capacity battery may be directly and gradually reduced, thereby directly achieving the balanced charging.

For example, when the battery with the first capacity is the first battery, the battery with the second battery is the second battery, and the voltage of the first battery is less than that of the second battery, disconnecting the balancing branch correspondingly connected to the second battery, so that the first battery and the second battery may be charged only through the series branch, and the voltage rise rate of the first battery may be greater than that of the second battery. The voltage difference between the first battery and the second battery may be gradually reduced.

For example, when the battery with the first capacity is the second battery, the battery with the second battery is the first battery, and the voltage of the first battery is greater than that of the second battery, disconnecting the balancing branch correspondingly connected to the second battery, so that the first battery and the second battery may be charged only through the series branch, and the voltage rise rate of the second battery may be greater than that of the first battery, the voltage difference between the first battery and the second battery may be gradually reduced.

The operations in the above-mentioned embodiments may be implemented by a processing circuit. The processing circuit may be configured to: obtain the status information and the capacity of each battery, and detect the balancing current of the current balancing current, and control the bidirectional current limiting unit to perform mode switch according to the current balancing current, the status information and the capacity. During the mode switch process, the difference of the voltages of the various batteries may trigger the mode switch of the DC conversion unit, thereby realizing the control of the DC conversion unit. Additionally and optionally, the processing circuit may realize control of the bidirectional current limiting unit by sending the drive signal to the bidirectional current limiting unit.

Although in the flowchart of the above-mentioned embodiments, the various operations may be illustrated sequentially as indicated by the arrows, these operations may be not necessarily executed sequentially according to the order indicated by these arrows. Unless explicitly stated herein, the sequence in which these operations may be performed may be not rigidly restricted, and these operations may be performed in any other sequence. Furthermore, at least a portion of the operations of the flowchart of the above-mentioned embodiments may include a plurality of sub-operations or a plurality of phases. These sub-operations or phases may be not necessarily executed and completed at the same moment, but may be executed at different moments. The order in which these sub-operations or phases may be executed may also not be necessarily sequential, but these sub-operations or phases may be executed in turn or alternately with other operations or at least a portion of sub-operations or phases of other operations.

Based on the same inventive concept, the embodiments of the present disclosure may also provide the balance control apparatus for implementing the above-mentioned balance control method. The implementation scheme for solving problems provided by this apparatus may be similar to the implementation scheme recited in the above-mentioned method. Therefore, for the specific limitations in the embodiments of the balance control apparatus provided below, one may refer to the limitations for the balance control method in the description above, and will not be elaborated herein.

In some embodiments, as illustrated in Fig. 10, the charging and discharging balance control apparatus may be provided. The charging and discharging balance control apparatus may include an obtaining module 102 and a control module 104. The obtaining module 102 may be configured to obtain the status information of the plurality of batteries connected in series during the charging process or the discharging processes. Capacities of the plurality of batteries may be different from each other. The positive electrode of each battery may be connected to the load through a corresponding or matching balancing branch. The plurality of batteries may be connected in series and then connected to the charging circuit. The charging circuit may be configured to charge the plurality of batteries connected in series. The control module 104 may be configured to adjust, according to the capacities and the status information of the plurality of batteries, the charging current and/or the discharging current of one of the plurality of batteries connected to at least one balancing branch, so that voltage differences of the plurality of batteries may fall within the preset range.

Regarding the balance control apparatus provided in the present embodiment, the obtaining module 102 may obtain the status information of the plurality of batteries connected in series during the charging process or the discharging processes; the control module 104 may adjust, according to the capacities and the status information of the plurality of batteries, the charging current and/or the discharging current of one of the plurality of batteries connected to at least one balancing branch, so that voltage differences of the plurality of batteries may fall within the preset range. In this way, the charging and discharging rates of the batteries with different capacities may be balanced under the condition of current balancing adjustment, and it may be ensured that the batteries may be fully charged or completely discharged simultaneously. The utilization rate of the structural space inside the device with the foldable screen configuration or the irregularly shaped battery compartment may be increased, the battery capacity of the terminal device may be increased, and the battery life of the device may thereby be enhanced.

In some embodiments, the control module may be further configured to: perform, in a case where the status information and the capacity meet the corresponding conditions, another control function. For details, please refer to the limitations of the relevant embodiments of the above-mentioned balance control method.

Based on the same inventive concept, the embodiments of the present disclosure may also provide the battery balance control system corresponding to the above-mentioned charging and discharging balance control method, and the charging and discharging balance control apparatus. The implementation scheme for solving problems provided by this battery balance control system may be similar to the implementation scheme recited in the above-mentioned method. Therefore, for the specific limitations in the embodiments of the balance control system provided below, one may refer to the limitations for the balance control method in the description above, which will not be elaborated herein.

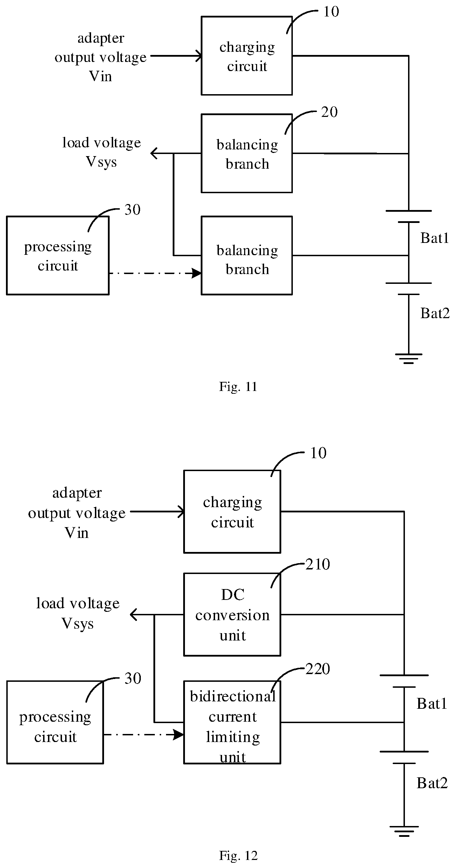

In some embodiments, the battery balance control system as illustrated in Fig. 11 may be provided. The battery balance control system may include: the plurality of batteries in series, the charging circuit 10, the plurality of balancing branches 20, and a processing circuit 30. The capacities of the plurality of batteries may be different from each other, and may be configured to discharge, so as to supply the voltage for the load. The charging circuit 10 may be connected to the plurality of batteries in series, and may be configured to charge the plurality of batteries in series. Each of the plurality of balancing branch 20 may be connected to the positive electrode of the matching battery, to the charging circuit 10, and to the load, and may be configured to adjust the charging current and discharging current of the connected battery. The processing circuit 30 may be configured to obtain the status information of each battery during the charging process and/or the discharging processes, and may be configured to control at least one balancing branch 20 to adjust, according to the capacities and the status information of the plurality of batteries, the charging current and/or the discharging current of its connected battery, so that the voltage differences of the plurality of batteries may fall within the preset range.

For details of the plurality of batteries in series, the charging circuit 10, and the balancing branches 20, please refer to the related descriptions in the above-mentioned embodiments, which will not be repeated here. The processing function of the processing circuit 30 may refer to the relevant introduction of the balance control method and the balance control device in the above-mentioned embodiments, and will not be elaborated herein.

By the battery balance control system provided in the present embodiment, the charging and discharging rates of the batteries with different capacities may be balanced under the condition of current balancing adjustment, and it may be ensured that, the batteries may be fully charged or completely discharged simultaneously, the utilization rate of the structural space inside the device with the foldable screen configuration or the irregularly shaped battery compartment may be increased, the battery capacity of the terminal device may be increased, and the battery life of the device may thereby be enhanced.

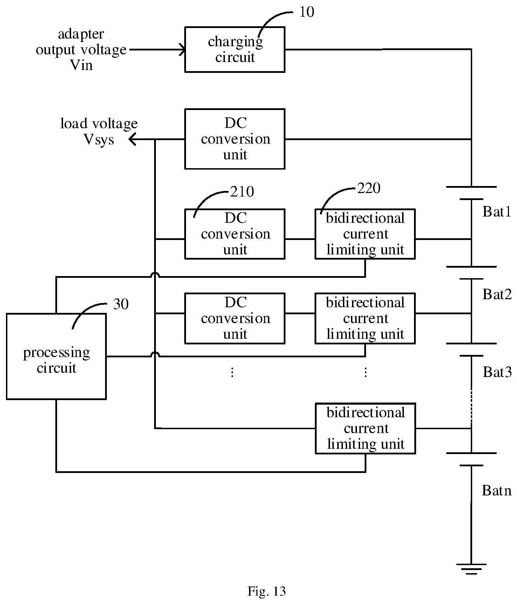

In some embodiments, as illustrated in Fig. 12 and Fig. 13, each balancing branch 20 in the balance control system may include the DC conversion unit 210 and/or the bidirectional current limiting unit 200. Each DC conversion unit 210 may be configured to perform voltage conversion on the voltage of the connected battery, and subsequently provide the voltage to another battery. The bidirectional current limiting unit 220 may be configured to adjust the balancing current in the balancing branch 20 where it is located, so that the voltage difference of the plurality of batteries in series may be kept within the preset range.

In some embodiments, the bidirectional current limiting unit 220 may be configured to: during the discharging process, when receiving the first drive signal, adjust the balancing current in the balancing branch 20 correspondingly connected to the battery with the first voltage or to the battery with the second voltage, the first voltage may be greater than the second voltage, and the voltage difference may be greater than the preset range, so that the discharging current of the battery with the first voltage may be greater than that of the battery with the second voltage, and the voltage difference of the plurality of batteries may fall within the preset range.

In some embodiments, the plurality of batteries may include the first battery and the second battery. The first battery may be connected to the load through the DC conversion unit 210. The second battery may be connected to the charging circuit 10 through the first battery, and may be connected to the load through the bidirectional current limiting unit 220. During the discharging process, the processing circuit 30 may be configured to: in a case where the capacity of the first battery is less than that of the second battery, when the voltage of the first battery is greater than that of the second battery and a voltage difference is greater than the first threshold, or when the voltage of the first battery is less than that of the second battery and the voltage difference falls within the threshold range, output the first drive signal. The processing circuit 30 may be further configured to: in a case where the capacity of the first battery is greater than that of the second battery, when the voltage of the first battery is greater than that of the second battery and the voltage difference is greater than the second threshold, output the first drive signal. The threshold range may be less than or equal to the first threshold and greater than the second threshold. The second threshold may be greater than the preset range and less than the first threshold.

In some embodiments, the bidirectional current limiting unit 200 may be further configured to: when receiving the second drive signal from the processing circuit 30, conduct the balancing branch 20 where the bidirectional current limiting unit 220 is located, to enable the target battery to discharge independently during the discharge process, the target battery may be at least one of the plurality of batteries; and when receiving the third drive signal, turn off the balanced branch 20 where the bidirectional current limiting unit 200 is located, to enable the plurality of batteries to be connected in series for discharging during the discharging process, and/or to enable the plurality of batteries to be connected in series for charging during the charging process. When the bidirectional current limiting unit 220 disconnects the balancing branch 20 where it is located, the DC conversion unit 210 may conduct the balancing branch 20 where it is located. When the bidirectional current limiting unit 220 conducts the balancing branch 20 where it is located, the DC conversion unit 210 may turn off the balancing branch 20 where it is located. The balancing branch 20 where the bidirectional current limiting unit 220 is located may be different from the balancing branch 20 where the DC conversion unit 210 is located.

In some embodiments, the plurality of batteries may include the first battery and the second battery. The first battery may be connected to the load through the DC conversion unit 210. The second battery may be connected to the charging circuit 10 through the first battery, and may be connected to the load through the bidirectional current limiting unit 220.

In some embodiments, during the discharging process, the processing circuit 30 may be further configured to: in a case where the capacity of the first battery is less than that of the second battery, the voltage of the first battery is less than that of the second battery, and the voltage difference is greater than the first threshold, and in a case where the capacity of the first battery is greater than that of the second battery, the voltage of the first battery is less than that of the second battery, and the voltage difference is greater than the first threshold, output a second drive signal, to enable the second battery to discharge independently, and/or the processing circuit 30 may be further configured to: in a case where the voltage difference between the voltage of the first battery and that of the second battery is less than the second threshold, and the voltage of the first battery is less than that of the second battery, output a second drive signal, so that the discharging current of the battery with the first capacity may be less than that of the battery with the second capacity, the first capacity may be less than the second capacity. The threshold range may be less than or equal to the first threshold and greater than the second threshold. The second threshold may be greater than the preset range and less than the first threshold.

In some embodiments, during the discharging process, the processing circuit 30 may be further configured to: in a case where the capacity of the first battery is less than that of the second battery, the voltage of the first battery is greater than that of the second battery, and the voltage difference falls within the threshold range, and in a case where the capacity of the first battery is greater than that of the second battery, the voltage of the first battery is less than that of the second battery, and the voltage difference falls within the threshold range, output the third drive signal, so that the discharging current of the first battery may be equal to the discharging current of the second battery; and/or the processing circuit 30 may be further configured to: in a case where the voltage difference between the voltage of the first battery and that of the second battery is less than the second threshold, and the voltage of the first battery is greater than that of the second battery, output the third drive signal, so that the discharging current of the battery with the first capacity may be less than that of the battery with the second capacity, the first capacity may be less than the second capacity.

In some embodiments, the bidirectional current limiting unit 200 may be further configured to: during the charging process, when receiving the first drive signal, adjust, during the charging process, the balancing current in the balancing circuit correspondingly connected to the battery with the first capacity or to the battery with the second capacity, the first capacity may be less than the second capacity, and the voltage difference between the battery with the first capacity and the battery with the second capacity may be greater than the preset range, so that the charging current of the battery with the first capacity may be less than that of the battery with the second capacity, and the voltage difference of the plurality of batteries may be within the preset range.

In some embodiments, the plurality of batteries may include the first battery and the second battery. The first battery may be connected to the load through the DC conversion unit 210. The second battery may be connected to the charging circuit 10 through the first battery, and may be connected to the load through the bidirectional current limiting unit 220. During the charging process, the processing circuit 30 may be further configured to, when the capacity of the first battery is less than that of the second battery, in a case where the voltage of the first battery is greater than that of the second battery and the voltage difference is greater than the third threshold, and in a case where the capacity of the first battery is greater than that of the second battery, the voltage of the first battery is less than that of the second battery, and the voltage difference is greater than the third threshold, output the first drive signal, so that the bidirectional current limiting unit 220 may adjust the balancing current in the second battery balancing branch 20. The third threshold may be greater than the preset range.

In some embodiments, the processing circuit 30 may be further configured to: control the total charging current input from the charging current to remain unchanged, and control the bidirectional current limiting unit 220 to increase the balancing current until the voltage difference is less than the third threshold, and/or the processing circuit 30 may be further configured to: in a case where the balancing current is equal to the current threshold and the voltage difference is greater than the third threshold, control the charging circuit 10 to reduce the total charging current. In some embodiments, the processing circuit 30 may be further configured to: in a case where the first battery is fully charged and the second battery is not fully charged, control the total charging current of the charging circuit 10 to be equal to the balancing current, and control the bidirectional current limiting unit 220 to input the balancing current to the second battery. In a case where the first battery is not-fully charged and the second battery is fully charged, control the charging circuit 10 to stop inputting the total charging current, and control the bidirectional current limiting unit 200 to input the balancing current output by the second battery to the first battery. In some embodiments, the processing circuit 30 may be further configured to: in a case where the voltage of the battery with the first capacity is less than the voltage of the battery with the second capacity, output the third drive signal, which may enable the bidirectional current limiting unit 200 to turn off the balancing branch 20 where it is located in, so that the plurality of batteries may be charged in series during the charging process.

In some embodiments, the above-mentioned bidirectional current limiting unit 220 may be an integrated-chip-type bidirectional current limiting device, or may be a circuit formed by assembling controllable discrete devices such as transistors, MOS tubes, and IGBTs. For example, the bidirectional current limiting unit 220 may include two PMOS tubes connected back to back. In some embodiments, the bidirectional current limiting unit 220 may also adopt mechanical physical structures or biochemical containers that may achieve the same function. In some embodiments, the DC conversion unit 210 may adopt circuits with DC voltage conversion functions such as switching power supply choppers, linear voltage regulators, charge pumps, LLC resonators, etc. In some embodiments, the DC conversion unit 210 and the bidirectional current limiting unit 220 may be discrete devices respectively, or may be integrated within the same chip.

The balance control system may achieve the balanced control of charging and discharging through the voltage adjusting function and equivalent switch mode of the DC conversion unit 210, as well as the balanced current adjusting mode and the switch mode of the bidirectional current limiting unit 220. The circuit may be simple, and may be conducive to reducing the device volume and to an integrated design.

The various batteries in the above-mentioned embodiments may include at least one battery cell. In some embodiments, in a case where the battery includes a plurality of battery cells, the plurality of battery cells may be connected in series and the capacities of the various battery cells may be the same. In some embodiments, the plurality of battery cells may be connected in parallel and the voltages of each battery cell may be the same. In order to achieve charge and discharge balance, the fully charged voltage of each battery may be the same. Therefore, the above-mentioned embodiments may be applied to single-cell batteries and multi-cell batteries. In some embodiments, the various battery may also be construed as a battery pack composed of a plurality of batteries connected in series or in parallel. Moreover, the fully charged voltages of the various battery packs may be the same. Therefore, the above-mentioned embodiments may also be applied to the multi-battery packs.

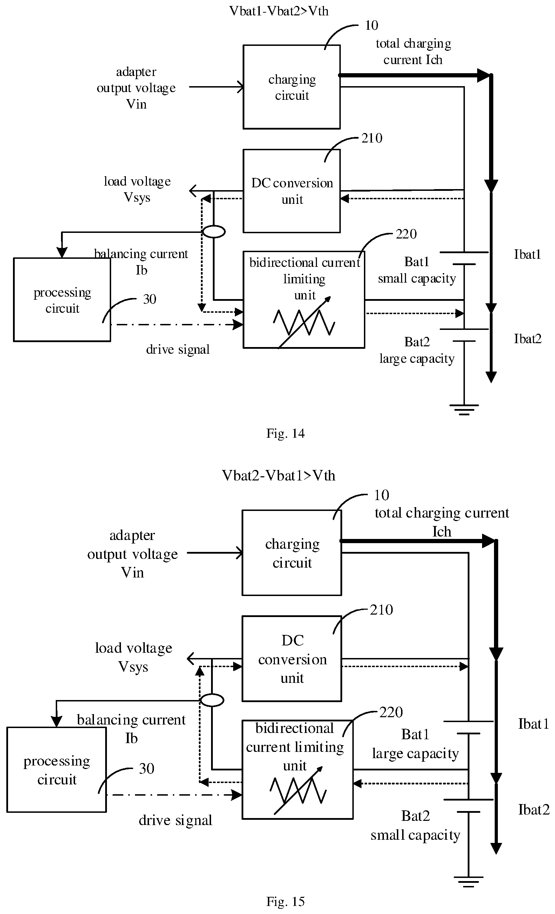

As illustrated in Fig. 14 to Fig. 20, a case may be taken as an example for further explanation and illustration of the above-mentioned multiple embodiments according to the charging process and the discharging process respectively, in which: the plurality of batteries only include two batteries, namely the Bat1 battery and the Bat2 battery, the Bat1 battery may be at the high end, the Bat2 battery may be at the ground end. The balancing branch 20 of the Bat1 battery may be provided with the DC conversion unit 210, the balancing branch 20 of the Bat2 battery may be provided with the bidirectional current limiting unit 220.

The charging process: when being inserted, the adapter may charge the series-connected Bat1 battery and Bat2 battery through the charging circuit 10. If the bidirectional current limiting unit 220 is turned off and does not operate, under the same charging current, the voltage rise rate of the small-capacity battery may be greater than that of the large-capacity battery, thus causing a certain voltage difference between the two voltages. In order to avoid the voltage difference between the two batteries from becoming greater and greater, resulting in the two batteries being unable to be fully charged at the same time in the end, the bidirectional current limiting unit 220 may switch to the balancing current adjusting mode, activate the shunt, so that the charging current of the small-capacity battery may be less than that of the large-capacity battery, thereby keeping the voltages of the large-capacity battery and the small-capacity battery being substantially equal and ensuring that the two batteries may be fully charged at the same time. Specifically: (1) As illustrated in Fig. 14, this may be a case where the Bat1 battery is the small-capacity battery and the Bat2 battery is the large-capacity battery. When Vbat1 <Vbat2, controlling the bidirectional current limiting unit 200 to activate the turning-off mode of the switch mode, disconnecting the balancing branch 20 corresponding to the Bat2 battery. The voltage rise rate of the small-capacity Bat1 battery may be greater than that of the large-capacity Bat2 battery, so that the voltage difference Vd=|Vbat1-Vbat2| may be reduced. When Vbat1>Vbat2, in a case where the voltage difference Vd>Vth (Vth may be a set value for the third threshold), controlling the bidirectional current limiting unit 220 to switch to the balanced current adjustment mode. Adjusting the magnitude of the balancing current Ib in real time through a closed-loop control process, such that Ibat1 <Ibat2. The voltage difference between the two batteries may decrease until less than Vth. When the balancing current Ib is adjusted to the maximum value and the battery difference continues to increase, it may be necessary to reduce the total charging current Ich. In a case where the Bat1 battery is fully charged and the Bat2 battery is not-fully charged yet, performing adjustment to achieve Ich=Ib, such that Ibat=Ich-Ib=0 and Ibat2=Ich, so as to ensure that the Bat1 battery may be not overcharged and the Bat2 battery may be fully charged. In a case where the Bat2 battery is fully charged while the Bat1 battery is not-fully charged yet, performing adjustment to achieve Ich=0 and Ib≠0. In other words, the battery Bat2 may charge the Battery Bat1, such that both batteries may be restored to a not-fully charged state. (2) As illustrated in Fig. 15, this may be a case where the Bat1 battery is the large-capacity battery and the Bat2 battery is the small-capacity battery. When Vbat2<Vbat1, controlling the bidirectional current limiting unit 200 to switch to the turning-off mode of the switch mode, disconnecting the balancing branch 20 corresponding to the Bat2 battery. The voltage rise rate of the small-capacity Bat2 battery may be greater than that of the large-capacity Bat1 battery, so that the voltage difference Vd=|Vbat1-Vbat2| may be reduced. When Vbat2>Vbat1, in a case where the voltage difference Vd>Vth (Vth may be a set value for the third threshold), controlling the bidirectional current limiting unit 220 to switch to the balanced current adjustment mode. Adjusting the magnitude of the balancing current Ib in real time through a closed-loop control process, such that Ibat2<Ibat1. The voltage difference between the two batteries may decrease until less than Vth. When the balancing current Ib is adjusted to the maximum value and the battery difference continues to increase, it may be necessary to reduce the total charging current Ich. In a case where the Bat1 battery is fully charged and the Bat2 battery is not-fully charged yet, performing adjustment to achieve Ich=0, and reversing the direction of Ib. In this way, the Bat1 battery may be enabled to charge the Bat2 battery, thereby enabling both batteries to return to the not-fully charged state. In a case where the Bat2 battery is fully charged while the Bat1 battery is not-fully charged yet, performing adjustment to achieve Ich=0 and Ib≠0. In this way, the Bat2 battery may be enabled to charge the Bat1 battery, thereby enabling both batteries to return to the not-fully charged state.

The discharging process: after the adapter is disconnected, in a case where the bidirectional current limiting unit 220 is controlled to switch to the turning-off mode of the switch mode, the series-connected dual batteries may supply power to the load through the DC conversion unit 210. Under the same discharging current, the voltage drop rate of the small-capacity battery may be greater than that of the large-capacity battery, thus causing a certain voltage difference between the two voltages. In order to avoid the voltage difference between the two batteries from becoming greater and greater, which would lead to the case where the two batteries cannot be completely discharged simultaneously in the end, controlling the bidirectional current limiting unit 220 to switch to the conduction mode of the switch mode, conducting the balancing branch 20 correspondingly connected to the Bat2 battery, which may be equivalent to directly connecting the Bat2 battery to the load to form the discharging path. This discharging path may be in parallel with another discharging path formed by the series branch of the Bat1 battery with the balancing branch 20 connected to the Bat1 battery. In this way, passive balance may be achieved, thereby keeping the voltages of batteries of different capacities being basically the same, and ensuring that the two batteries may be completely discharged simultaneously.

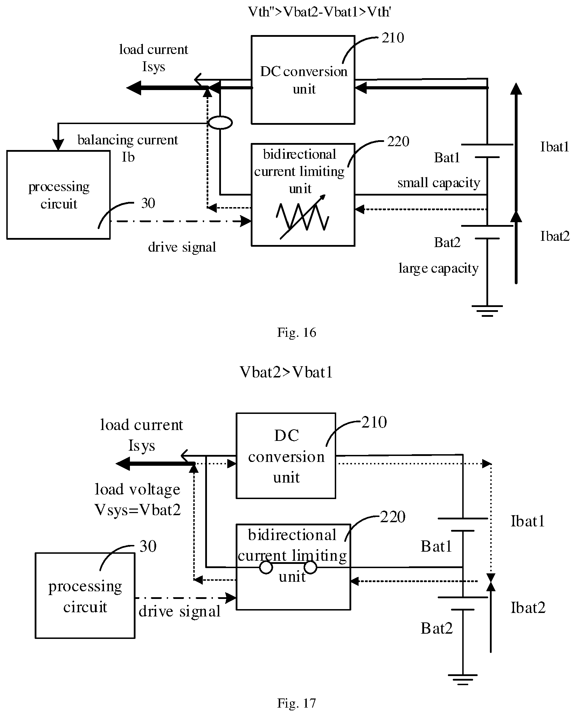

Condition (1): as illustrated in Fig. 16-Fig. 17, in a case where the voltage difference Vd=|Vbat2-Vbat1| between two batteries is relatively small (corresponding to the second threshold and may even approach 0 or be near 0), controlling the bidirectional current limiting unit 220 to switch to the switch mode, the bidirectional current limiting unit 220 may conduct the balancing branch 20 correspondingly connected to the Bat2 battery. When Vbat2>Vbat1, as illustrated Fig. 12, at this point, the DC conversion unit 210 may only allow the current to flow in from the first end and out from the second end of the DC conversion unit 210. This may be construed as that, the balancing branch 20 through which the Bat1 battery provides the discharge current to the load may be disconnected, the Bat2 battery alone may supply power to the load. At this point, Vsys=Vbat2. When Vbat2<Vbat1, as illustrated in Fig. 17, controlling the bidirectional current limiting unit 220 to turn off the balancing branch 20 correspondingly connected to the Bat2 battery. The Bat1 battery and the Bat2 battery may be connected in series, and subsequently supply power to the load through the DC conversion unit 210. Regarding the current path distribution, the shunt current may be automatically and balancing distributed according to the voltage relationship under actual operation conditions. Thus, during the entire discharge process, the average discharging current of the small-capacity battery may be less than that of the large-capacity battery, so that the voltage difference in the entire process may be near 0, ensuring that the two batteries may be completely discharged simultaneously. Condition (2): in a case where the voltage difference of two batteries Vd=|Vbat2-Vbat1| is relatively large, if the bidirectional current limiting unit 220 is controlled to maintain the switch mode and the balancing branch 20 correspondingly connected to the Bat2 battery is conducted, excessive current in the DC conversion unit 210 or the bidirectional current limiting unit 220 may occur, which may lead to accidents such as over-temperature or even damage of the devices. At this point, controlling the bidirectional current limiting unit 220 to switch to the balanced current adjustment mode or to the turning-off mode of the switch mode, and disconnecting the balancing branch 20 correspondingly connected to the Bat2 battery, and limiting the magnitude of the balancing current Ib. In this way, it may be ensured that, the current of the DC conversion unit 210 and the current of the battery may not exceed a rated safety value.

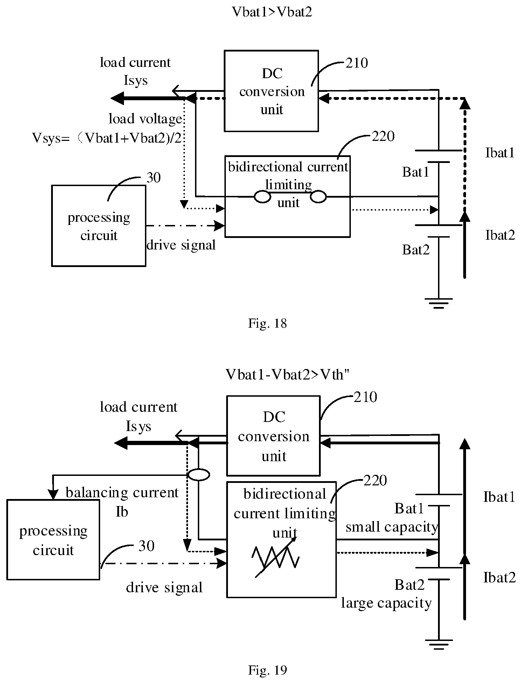

In a case where the Bat1 battery is the small-capacity battery and the Bat2 battery is the large-capacity battery, when Vbat1-Vbat2>Vth" (Vth" corresponds to the first threshold), as illustrated in Fig. 18, controlling the bidirectional current limiting unit 220 to switch to the balanced current adjustment mode, the balancing current may flow from the high end to the low end. At this point, Ibat1=Ibat2+Ib>Ibat2, which may enable the voltage drop rate of the Bat1 battery to be greater than that of the Bat2 battery, so that the voltage difference Vd may be rapidly reduced. When Vth">=Vbat1-Vbat2>Vth' (corresponding to the threshold range) (please refer to Fig. 13 for assistance), switching the bidirectional current limiting unit 220 to the turning-off mode of the switch mode and turning off the balancing branch 20 correspondingly connected to the Bat2 battery. The large-capacity battery and the small-capacity battery may be connected in series, and may subsequently supply power or voltage to the load through the DC conversion unit 210, thus Ibat1=Ibat2. The voltage of the small-capacity Bat1 battery may drop relatively faster. Therefore, the voltage difference Vd may continue to decrease continuously. When the voltage difference decreases to approach 0, power may be automatically balanced and supplied to the load according to the condition (1). When Vbat2-Vbat1>Vth", if the small-capacity battery Bat1 continues to discharge, it will be depleted in a short time. At this point, turning off the balancing branch 20 where the DC conversion unit 210 is located (please refer to the Fig. 16 for assistance), only the large-capacity battery Bat2 may be allowed to discharge. When Vth" >=Vbat2-Vbat1 > Vth', as illustrated in Fig. 19, controlling the switch to the balanced current adjustment mode and conducting the balancing branch 20 where the DC conversion unit 210 is located, controlling the magnitude of the balancing current Ib, such that Ibat1=Isys-Ib and Ibat1 may be less than Ibat2, the voltage drop rate of the large-capacity battery may thus be greater than that of the small-capacity battery. In this way, it may be ensured that the voltage difference Vd may be continuously reduced. When the voltage difference decreases to approach 0, power may be automatically balanced and supplied to the load according to the condition (1).

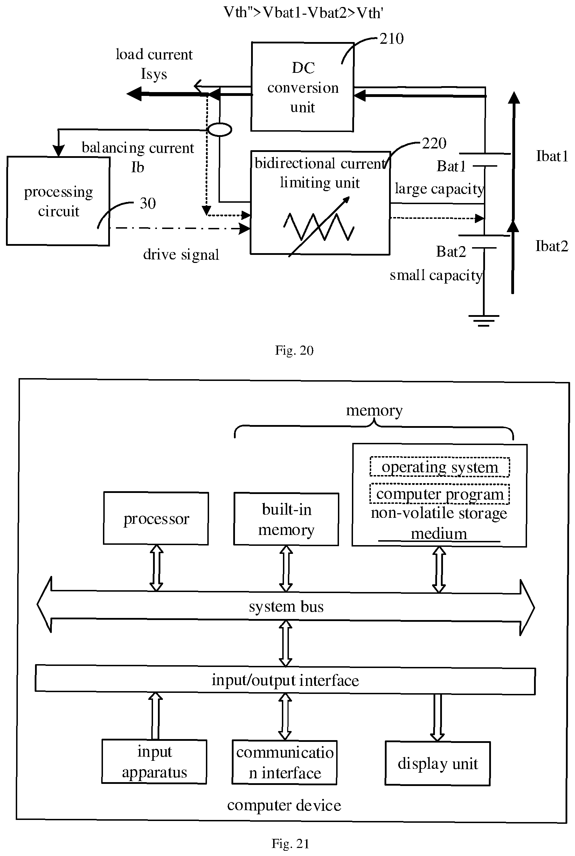

In a case where the Bat1 battery is the large-capacity battery and the Bat2 battery is the small-capacity battery, when Vbat2-Vbat1>Vth", if the large-capacity battery Bat1 continues to discharge, it will be depleted in a short time. At this point, switching to the switch mode and turning off the DC conversion unit 210, only the small-capacity battery Bat2 may be allowed to discharge. When Vth" > Vbat2- Vbat1 > Vth', maintaining the switch mode, while controlling the bidirectional current limiting unit 220 to turn off, and controlling the DC conversion unit 210 to equivalently conduct the balancing branch 20. The large-capacity battery and the small-capacity battery may be connected in series, and subsequently supply power or voltage to the load through the DC conversion unit 210, thus Ibat1=Ibat2. The voltage of the small-capacity battery Bat2 may drop relatively faster. Therefore, the voltage difference Vd may decrease continuously. When the voltage difference is reduced to near 0 or approach 0, the bidirectional current limiting unit 220 may be controlled to switch to the switch mode, and the power supply to the load may be automatically balanced according to the condition (1). When Vbat1-Vbat2>Vth', as illustrated in Fig. 20, controlling the bidirectional current limiting unit 220 to switch to the balanced current adjustment mode, controlling the magnitude of the balancing current Ib, such that Ibat1=Isys+Ib and Ibat1 may be greater than Ibat2, the voltage drop rate of the large-capacity battery may thus be greater than that of the small-capacity battery. In this way, it may be ensured that the voltage difference Vd may be continuously reduced. When the voltage difference is reduced to near 0 or approach 0, the bidirectional current limiting unit 220 may switch to the switch mode, and may automatically balance the power supply to the load according to the condition (1).

The division of the various modules in the above-mentioned balance control apparatus and battery balance control system may be only for illustrative purposes. In some other embodiments, the balance control apparatus and the battery balance control system may be divided into different modules as needed, so as to realize all or part of the functions of the above-mentioned balance control apparatus and the balance control system. The above-mentioned balance control apparatus and the various modules in the balance control system may be implemented as a whole or in part by software, hardware, and combinations thereof. The above-mentioned various modules may be embedded in or independent of the processor of the computer device in the form of hardware, or may be stored in the memory of the computer device in the form of software, so as to be recalled by the processor to perform the operation corresponding to the above-mentioned various modules.

The present disclosure may further provide an electronic device. The electronic device may include: the load; and the battery balance control system in the above-mentioned embodiments. The charging and discharging rates of the batteries with different capacities may be balanced under the condition of current balancing adjustment, and it may be ensured that the batteries may be fully charged or completely discharged simultaneously. The utilization rate of a structural space inside a device with the foldable screen configuration or the irregularly shaped battery compartment may be increased, the battery capacity of the terminal device may be increased, and the battery life of the device may thereby be enhanced.

The present disclosure may further provide another electronic device. The electronic device may include: a plurality of batteries in series, a charging circuit, a plurality of balancing branches, a memory and a processor. The capacities of the plurality of batteries may be different from each other, and may be configured to discharge, so as to supply voltage for the load. The charging circuit may be connected to the plurality of batteries in series, and may be configured to charge the plurality of batteries in series. Each of the plurality of balancing branch may be connected to the positive electrode of a matching battery, to the charging circuit, and to the load, and may be configured to adjust the charging current and discharging current of the connected battery. The memory may store a computer program. When executing the computer program, the processor may be configured to implement the operations in the above-mentioned balance control method, the charging and discharging rates of the batteries with different capacities may be balanced under the condition of current balancing adjustment, and it may be ensured that the batteries may be fully charged or completely discharged simultaneously, the utilization rate of the structural space inside a device with the foldable screen configuration or the irregularly shaped battery compartment may be increased. The battery capacity of the terminal device may be increased, and the battery life of the device may thereby be enhanced.

In some embodiments, as illustrated in Fig. 21, the balance control system may further include a network interface. The network interface may be connected to the processor and the memory through a system bus. The processor of this computer device may be configured to provide computing and control capabilities. The memory of this computer device may include a non-volatile storage medium and a built-in memory. The non-volatile storage medium may store an operating system, a computer program and a database. The built-in memory may provide an environment for the operation of the operating system and computer programs in non-volatile storage medium. The network interface of this computer device may be configured for communication with external terminals through network connection. This computer program, while executed by the processor, may be configured to achieve a communication control method. The structure illustrated in Fig. 21 may only be a block diagram of a part of the structure related to the scheme of the present disclosure, and may not constitute a limitation on the computer device on which the scheme of the present disclosure is applied. A particular computer device may include more or fewer components than those illustrated, a combination of certain components, or a different arrangement of components.

A computer-readable storage medium storing a computer program may be further provided in the present disclosure. When being executed by the processor, the computer program may be configured to implement the steps of the selected method in the above-mentioned embodiments and/or the steps of the balance control method in the above-mentioned embodiments.

A computer program product including a computer program may be further provided in the present disclosure. This computer program, when being executed by a processor, may be configured to implement operations of the balance control method of the above-mentioned embodiments.

Any reference to a memory, a storage, a database or other media made in the present disclosure may include a non-volatile memory and/or a volatile memory. Suitable non-volatile memory may include a read only memory (ROM), a programmable ROM (PROM), an electrically programmable ROM (EPROM), an electrically erasable programmable ROM (EEPROM), or a flash memory. The volatile memory may include a random access memory (RM), which may serve as an external cache memory. As illustration but not limitation, RM nay be available in various forms, such as a static RM (SRM), a dynamic RM (DRM), a synchronous DRM (SDRM), a double data rate SDRM (DDR SDRM), an enhanced SDRM (ESDRM), a synchronous Link (Synchlink) DRM (SLDRM), a Memory Bus (Rmbus) Direct RM (RDRM), a Direct Rambus Dynamic RM (DRDRM), and a Rambus Dynamic RM (RDRM).

Each technical feature in the above-mentioned embodiments may be combined arbitrarily. For a concise description, all possible combinations of the various technical features in the above-mentioned embodiments are not described. Each combination of these technical features which has no contradiction should be regarded within a disclosure scope recited by the specification of the present disclosure. The above-mentioned embodiments may only express a few implementations of the present disclosure, the description thereof is relatively specific and detailed, and should not be construed as a limitation on the patent scope of the present disclosure. It should be pointed out that, for those of ordinary skills in the art, without departing from the concept of the present disclosure, several modifications and improvements may be made, which shall all fall within the protection scope of the present disclosure. Therefore, the protection scope of the present disclosure should be subject to the appended claim set.

## Claims

1. A charging and discharging balance control method, comprising:
obtaining status information of a plurality of batteries connected in series during a charging process or a discharging processes, wherein capacities of the plurality of batteries are different from each other, a positive electrode of each of the plurality of batteries is configured to be connected to a load through a matching balancing branch, the plurality of batteries are configured to be connected in series and to be subsequently connected to a charging circuit, the charging circuit is configured to charge the plurality of batteries connected in series;
adjusting, according to the capacities and the status information of the plurality of batteries, charging current and/or discharging current of one of the plurality of batteries connected to at least one balancing branch, so that voltage differences of the plurality of batteries fall within a preset range.

2. The balance control method as claimed in claim 1, wherein
the adjusting the charging current and/or the discharging current of one of the plurality of batteries connected to the at least one balancing branch comprises:
adjusting, during the discharging process, balancing current in the balancing branch correspondingly connected to one of the plurality of batteries with a first voltage or with a second voltage, so that the discharging current of the battery with the first voltage is greater than that of the battery with the second voltage, wherein the first voltage is greater than the second voltage, and the voltage difference is greater than the preset range;
adjusting, during the charging process, the balancing current in the balancing circuit connected to one of the plurality of batteries with a first capacity or with a second capacity, so that the charging current of the battery with the first capacity is less than that of the battery with the second capacity, the first capacity is less than the second capacity, and the voltage difference between the battery with the first capacity and the battery with the second capacity is greater than the preset range.

3. The balance control method as claimed in claim 2, wherein
the plurality of batteries comprise a first battery and a second battery, the second battery is connected to the charging circuit through the first battery; the status information comprises voltages of the plurality of batteries;
the adjusting, during the discharging process, the balancing current in the balancing branch correspondingly connected to one of the plurality of batteries with the first voltage or with the second voltage comprises:
in a case where the capacity of the first battery is less than that of the second battery, when the voltage of the first battery is greater than that of the second battery and the voltage difference is greater than a first threshold, or when the voltage of the first battery is less than that of the second battery and the voltage difference falls within the threshold range, adjusting the balancing current in the balancing branch correspondingly connected to the second battery;
in a case where the capacity of the first battery is greater than that of the second battery, when the voltage of the first battery is greater than that of the second battery and the voltage difference is greater than a second threshold, adjusting the balancing current in the balancing branch correspondingly connected to the second battery;
wherein the threshold range is less than or equal to the first threshold and greater than the second threshold, the second threshold is greater than the preset range and less than the first threshold.

4. The balance control method as claimed in claim 3, further comprising:
in a case where the capacity of the first battery is less than that of the second battery, the voltage of the first battery is less than that of the second battery, and the voltage difference is greater than the first threshold, disconnecting the balancing branch correspondingly connected to the first battery and conducting the balancing branch correspondingly connected to the second battery, to enable the second battery to discharge independently;
in a case where the capacity of the first battery is greater than that of the second battery, the voltage of the first battery is less than that of the second battery, and the voltage difference is greater than the first threshold, disconnecting the balancing branch correspondingly connected to the first battery and conducting the balancing branch correspondingly connected to the second battery, to enable the second battery to discharge independently.

5. The balance control method as claimed in claim 3, further comprising:
in a case where the capacity of the first battery is less than that of the second battery, the voltage of the first battery is greater than that of the second battery, and the voltage difference falls within the threshold range, conducting the balancing branch correspondingly connected to the first battery and disconnecting the balancing branch correspondingly connected to the second battery, to enable the discharging current of the first battery being equal to that of the second battery;
in a case where the capacity of the first battery is greater than that of the second battery, the voltage of the first battery is less than that of the second battery, and the voltage difference falls within the threshold range, conducting the balancing branch correspondingly connected to the first battery and disconnecting the balancing branch correspondingly connected to the second battery, to enable the discharging current of the first battery being equal to that of the second battery.

6. The balance control method as claimed in claim 3, further comprising:
in a case where the voltage difference between the voltage of the first battery and that of the second battery is less than the second threshold, and the voltage of the first battery is less than that of the second battery, turning off the balancing branch correspondingly connected to the first battery and conducting the balancing branch correspondingly connected to the second battery, to enable the discharging current of the battery with the first capacity being less than that of the battery with the second capacity, wherein the first capacity is less than the second capacity;
in a case where the voltage difference between the voltage of the first battery and that of the second battery is less than the second threshold, and the voltage of the first battery is greater than that of the second battery, conducting the balancing branch correspondingly connected to the first battery and disconnecting the balancing branch correspondingly connected to the second battery, to enable the discharging current of the battery with the first capacity being less than that of the battery with the second capacity.

7. The balance control method as claimed in claim 2, wherein
the plurality of batteries comprise a first battery and a second battery, the second battery is connected to the charging circuit through the first battery; the status information comprises voltages of the plurality of batteries; the adjusting, during the charging process, the balancing current in the balancing circuit correspondingly connected to one of the plurality of batteries with the first capacity or with the second capacity comprises:
in a case where the capacity of the first battery is less than that of the second battery, the voltage of the first battery is greater than that of the second battery, and the voltage difference is greater than the third threshold, adjusting the balancing current in the balancing branch correspondingly connected to the second battery;
in a case where the capacity of the first battery is greater than that of the second battery, the voltage of the first battery is less than that of the second battery, and the voltage difference is greater than the third threshold, adjusting the balancing current in the balancing branch correspondingly connected to the second battery;
wherein the third threshold is greater than the preset range.

8. The balance control method as claimed in claim 7, wherein
the adjusting, during the charging process, the balancing current in the balancing branch correspondingly connected to the second battery, comprises:
in a case where a total charging current input to the charging circuit remains unchanged, increasing the balancing current, until the voltage difference is less than the third threshold.

9. The balance control method as claimed in claim 8, wherein
the adjusting, during the charging process, the balancing current in the balancing branch correspondingly connected to the second battery further comprises:
in a case where the balancing current is equal to the current threshold and the voltage difference is greater than the third threshold, reducing the total charging current.

10. The balance control method as claimed in claim 7, wherein
the adjusting, during the charging process, the balancing current in the balancing branch correspondingly connected to the second battery further comprises:
in a case where the first battery is fully charged and the second battery is not fully charged, controlling the total charging current of the charging circuit to equal the balancing current, and controlling the balancing current to be input to the second battery;
in a case where the first battery is not-fully charged and the second battery is fully charged, controlling the charging circuit to stop inputting the total charging current, and controlling the balancing current output from the second battery to be input to the second battery.

11. The balance control method as claimed in claim 7, wherein
the plurality of batteries comprise a first battery and a second battery, the second battery is connected to the charging circuit through the first battery; the status information comprises voltages of the plurality of batteries; the balance control method further comprises:
in a case where the voltage of the battery with the first capacity is less than the voltage of the battery with the second capacity, disconnecting the balancing branch correspondingly connected to the second battery, and to enable that the plurality of batteries are charged in series during the charging process.

12. A charging and discharging balance control apparatus, comprising:
an obtaining module, configured to obtain status information of a plurality of batteries connected in series during a charging process or a discharging processes, wherein capacities of the plurality of batteries are different from each other, a positive electrode of each battery is configured to be connected to a load through a matching balancing branch, the plurality of batteries are connected in series and subsequently connected to a charging circuit, the charging circuit is configured to charge the plurality of batteries connected in series;
a control module, configured to adjust, according to the capacities and the status information of the plurality of batteries, charging current and/or discharging current of one of the plurality of batteries connected to at least one balancing branch, so that voltage differences of the plurality of batteries fall within a preset range.

13. A battery balance control system, comprising:
a plurality of batteries in series, wherein capacities of the plurality of batteries are different from each other, and the plurality of batteries are configured to discharge, so as to supply voltage for a load;
a charging circuit, connected to the plurality of batteries in series, and configured to charge the plurality of batteries in series;
a plurality of balancing branches, wherein each of the plurality of balancing branches is connected to a positive electrode of a matching battery, to the charging circuit, and to the load, and is configured to adjust a charging current and a discharging current of a connected battery;
a processing circuit, configured to obtain status information of each of the plurality of batteries during a charging process and/or a discharging process, and is configured to control at least one balancing branch to adjust, according to the capacities and the status information of the plurality of batteries, the charging current and/or the discharging current of the connected battery, so that the voltage differences of the plurality of batteries fall within a preset range.

14. The balance control system as claimed in claim 13, wherein
each balancing branch comprises a DC conversion unit and/or a bidirectional current limiting unit;
wherein the DC conversion unit is configured to perform voltage conversion on a voltage of its connected battery, and subsequently supply the voltage for another battery;
the bidirectional current limiting unit is configured to adjust a balancing current in the balancing branch where the bidirectional current limiting unit is located, so that a voltage difference of the plurality of batteries in series is kept within the preset range.

15. The balance control system as claimed in claim 14, wherein
the bidirectional current limiting unit is configured to:
during the discharging process, when receiving the first drive signal, adjust the balancing current in the balancing branch correspondingly connected to the battery with a first voltage or to the battery with a second voltage, wherein the first voltage is greater than the second voltage, and the voltage difference is greater than the preset range, so that the discharging current of the battery with the first voltage is greater than that of the battery with the second voltage, and the voltage difference of the plurality of batteries is within the preset range;
during the charging process, when receiving the first drive signal, adjust, during the charging process, the balancing current in the balancing circuit correspondingly connected to the battery with a first capacity or to the battery with a second capacity, wherein the first capacity is less than the second capacity, and the voltage difference between the battery with the first capacity and the battery with the second capacity is greater than the preset range, so that the charging current of the battery with the first capacity is less than that of the battery with the second capacity, and the voltage difference of the plurality of batteries falls within the preset range.

16. The balance control system as claimed in claim 15, wherein
the plurality of batteries comprise a first battery and a second battery, the first battery is connected to a load through the DC conversion unit, the second battery is connected to the charging circuit through the first battery and is connected to the load through the bidirectional current limiting unit;
during the discharging process, the processing circuit is configured to: in a case where a capacity of the first battery is less than that of the second battery, when a voltage of the first battery is greater than that of the second battery and a voltage difference is greater than a first threshold, or when the voltage of the first battery is less than that of the second battery and the voltage difference falls within a threshold range, output the first drive signal; and the processing circuit is further configured to: in a case where the capacity of the first battery is greater than that of the second battery, when the voltage of the first battery is greater than that of the second battery and the voltage difference is greater than the second threshold, output the first drive signal;
wherein the threshold range is less than or equal to the first threshold and greater than the second threshold, and the second threshold is greater than the preset range and less than the first threshold.

17. The balance control system as claimed in claim 14, wherein
the bidirectional current limiting unit is further configured to: when receiving a second drive signal from the processing circuit, conduct the balancing branch where the bidirectional current limiting unit is located, to enable a target battery to discharge independently during the discharge process, wherein the target battery is at least one of the plurality of batteries; and when receiving a third drive signal, turn off the balancing branch where the bidirectional current limiting unit is located, to enable the plurality of batteries to be connected in series for discharging during the discharging process, and/or to enable the plurality of batteries to be connected in series for charging during the charging process;
wherein when the bidirectional current limiting unit disconnects the balancing branch where it is located, the DC conversion unit conducts the balancing branch where the DC conversion unit is located;
when the bidirectional current limiting unit conducts the balancing branch where it is located, the DC conversion unit turns off the balancing branch where the DC conversion unit is located;
the balancing branch where the bidirectional current limiting unit is located is different from the balancing branch where the DC conversion unit is located.

18. The balance control system as claimed in claim 17, wherein
the plurality of batteries comprise a first battery and a second battery, the first battery is connected to a load through the DC conversion unit, the second battery is connected to the charging circuit through the first battery and is connected to the load through the bidirectional current limiting unit;
during the discharging process, the processing circuit is further configured to: in a case where a capacity of the first battery is less than that of the second battery, a voltage of the first battery is less than that of the second battery, and a voltage difference is greater than the first threshold, and in a case where the capacity of the first battery is greater than that of the second battery, the voltage of the first battery is less than that of the second battery, and the voltage difference is greater than the first threshold, output a second drive signal to enable the second battery discharge independently; and/or the processing circuit is further configured to: in a case where the voltage difference between the voltage of the first battery and that of second battery is less than the second threshold, and the voltage of the first battery is less than that of the second battery, output the second drive signal, so that the discharging current of the battery with the first capacity is less than that of the battery with the second capacity, wherein the first capacity is less than the second capacity;
wherein the threshold range is less than or equal to the first threshold and greater than the second threshold; the second threshold is greater than the preset range and less than the first threshold.

19. The balance control system as claimed in claim 18, wherein
during the discharging process, the processing circuit is further configured to: in a case where the capacity of the first battery is less than that of the second battery, the voltage of the first battery is greater than that of the second battery, and the voltage difference falls within the threshold range, and in a case where the capacity of the first battery is greater than that of the second battery, the voltage of the first battery is less than that of the second battery, and the voltage difference falls within the threshold range, output the third drive signal, so that the discharging current of the first battery is equal to the discharging current of the second battery; and/or
the processing circuit is further configured to: in a case where the voltage difference between the voltage of the first battery and that of the second battery is less than the second threshold, and the voltage of the first battery is greater than that of the second battery, output the third drive signal, so that the discharging current of the battery with the first capacity is less than that of the battery with the second capacity, the first capacity is less than the second capacity.

20. The balance control system as claimed in claim 15, wherein
the plurality of batteries comprise a first battery and a second battery, the first battery is connected to a load through the DC conversion unit, the second battery is connected to the charging circuit through the first battery and is connected to the load through the bidirectional current limiting unit;
during the charging process, the processing circuit is further configured to: in a case where the capacity of the first battery is less than that of the second battery, the voltage of the first battery is greater than that of the second battery, and the voltage difference is greater than a third threshold, and in a case where the capacity of the first battery is greater than that of the second battery, the voltage of the first battery is less than that of the second battery, and the voltage difference is greater than the third threshold, output a first drive signal, which enables the bidirectional current limiting unit to adjust the balancing current in the balancing branch for the second battery;
wherein the third threshold is greater than the preset range.

21. The balance control system as claimed in claim 20, wherein
the processing circuit is further configured to: control the total charging current input from the charging current to remain unchanged, and control the bidirectional current limiting unit to increase the balancing current until the voltage difference is less than the third threshold; and/or the processing circuit is further configured to: in a case where the balancing current is equal to the current threshold and the voltage difference is greater than the third threshold, control the charging circuit to reduce a total charging current.

22. The balance control system as claimed in claim 20, wherein
the processing circuit is further configured to: in a case where the first battery is fully charged and the second battery is not fully charged, control the total charging current of the charging circuit to be equal to the balancing current, and control the bidirectional current limiting unit to input the balancing current to the second battery; or in a case where the first battery is not-fully charged and the second battery is fully charged, control the charging circuit to stop inputting the total charging current, and control the bidirectional current limiting unit to input the balancing current output by the second battery to the first battery.

23. The balance control system as claimed in claim 20, wherein
the processing circuit is further configured to in a case where the voltage of the battery with the first capacity is less than the voltage of the battery with the second capacity, output a third drive signal, which enables the bidirectional current limiting unit to turn off the balancing branch where the bidirectional current limiting unit is located, so that the plurality of batteries are charged in series during the charging process.

24. The balance control system as claimed in any of claims 13-23, wherein
each battery comprises at least a battery cell;
in a case where the battery comprises a plurality of battery cells, the plurality of battery cells are connected in series and the capacities of the plurality of battery cells are the same; or the plurality of battery cells are connected in parallel and the voltages of the plurality of battery cells are the same.

25. An electronic device, comprising:
a load; and
the battery balance control system as claimed in any of claims 13-24.

26. An electronic device, comprising:
a plurality of batteries in series, wherein capacities of the plurality of batteries are different from each other, and the plurality of batteries are configured to discharge, so as to supply voltage for a load;
a charging circuit, connected to the plurality of batteries in series, and configured to charge the plurality of batteries in series;
a plurality of balancing branches, wherein each of the plurality of balancing branches is connected to a positive electrode of a matching battery, to the charging circuit, and to the load, and is configured to adjust a charging current and a discharging current of a connected battery;
a memory and a processor, wherein the memory stores a computer program; the processor implements, when executing the computer program, operations of the balance control method as claimed in any of claims 1-11.

27. A computer-readable storage medium storing a computer program, wherein
the computer program, when being executed by a processor, is configured to implement operations of the balance control method as claimed in any of claims 1-11.
